# EUROPÄISCHE PATENTSCHRIFT

(11) **EP 1 409 911 B1**
(45) Veröffentlichungstag und Bekanntmachung des Hinweises auf die Patenterteilung: **01.12.2004**
(21) Anmeldenummer: 03738058.1
(22) Anmeldetag: 18.06.2003
(51) Int. Cl.: F16L 37/40, F16L 37/084

(54) **ENTLÜFTUNGSKUPPLUNG MIT DREHENTRIEGELUNG**
VENTILATION COUPLING DEVICE COMPRISING A ROTARY UNLOCKING MECHANISM
RACCORD A PURGE D'AIR A DEVERROUILLAGE PAR ROTATION

(30) Priorität: 19.06.2002 DE 10227296
(43) Veröffentlichungstag der Anmeldung: 21.04.2004
(73) Patentinhaber: Rectus GmbH, 71735 Eberdingen-Nussdorf (DE)
(72) Erfinder: SIMON, Horst, 51643 Gummersbach (DE)
(74) Vertreter: Patentanwälte Rüger, Barthelt & Abel
(86) Internationale Anmeldenummer: PCT/EP2003/006421
(87) Internationale Veröffentlichungsnummer: WO 2004/001274

(56) Entgegenhaltungen:
- EP-A- 1 180 634
- EP-A- 1 298 378
- DE-C- 10 040 979

## Beschreibung

Aus der Praxis, zum Beispiel aus dem Dokument DE 100 40 979, ist ein Buchsenteil für eine pneumatische Entlüftungskupplung bekannt. Das Buchsenteil besteht aus einem Grundkörper, dessen vorder Abschnitt von einem Kunststoffformteil gebildet ist und dessen hinterer Abschnitt aus Metall besteht. Im Grundkörper ist ein durchgehender rotationssymmetrischer Kanal enthalten, der der Aufnahme eines Steckers dient. Die Außenumfangsfläche des Grundkörpers ist mit zwei zueinander diametralen, in Längsrichtung verlaufenden geraden Rippen versehen, die gleichzeitig als Drehsicherung für eine darauf verschiebliche Betätigungshülse dienen.

In dem Grundkörper sind im Abstand zum vorderen Ende zwei schrägverlaufende Langlöcher enthalten, die tangential zu dem Kanal verlaufen und diesen schneiden. In diesen beiden schräg verlaufenden Langlöchern sitzen zwei zylindrische Raststifte, die bei eingeführtem Stecker hinter eine Schulter an den Stecker greifen um den Stecker am Buchsenteil festzuhalten.

Zwischen den beiden schrägverlaufenden Langlöchern befinden sich symmetrisch zwei Langlöcher, deren Längsachse parallel zur Längsachse des Kanals liegt und in denen kugelförmige Fangköper beweglich geführt sind. Die Fangköper sollen nach dem Öffnen der Kupplung den Stecker zunächst noch festhalten bis der Druck abgebaut ist, damit der Stecker nicht durch den herrschenden Innendruck herausgeschleudert wird. Um dies zu erreichen befinden sich radial außenliegend, bezogen auf die Fangkugeln, jeweils zwei Halte- oder Stützflächen pro Kugel.

Die eine Stützfläche hat einen geringeren radialen Abstand als die andere Stützfläche. Der radiale Abstand der zweiten Stützfläche ist so bemessen, dass die Fangkugel in dem Langloch in einer Position fixiert wird, in der sie in den Kanal hineinragt. Die zweite Stützfläche hat einen größeren radialen Abstand und gestattet ein radial nach außen gerichtetes Zurückweichen der Haltekugel, bis die Kugel hinter die zylindrische Mandelfläche des Kanals zurückweicht. Die beiden Stützflächen gehen mit einem Sprung ineinander über und zwar an einer solchen Stelle, dass die jeweilige Kugel im Zusammenwirken zwischen der Übergangstelle der Stützflächen und der Wand des Langlochs in einer radialen Position gehalten werden, in der sie in das Lichtraumprofil des Kanals ragt.

Die hinteren Stützflächen sind an einem Druckring als Rippen ausgebildet, der gleichzeitig mit den radial überstehenden Enden der Verriegelungsstifte zusammenwirkt. Mittels einer Schraubendruckfeder, die sich andernends über einen Zwischenring an einer Schulter des Grundkörpers abstützt, wird der Druckring gegen die Zylinderstifte gepresst, damit diese in den schrägverlaufenden Langlöchern am vorderen Ende gehalten werden.

Um das Buchsenteil vom Stecker entkuppeln zu können, ist auf dem Grundkörper eine Betätigungshülse axial verschieblich gelagert, die einerseits mit der Zwischenscheibe verrastet ist und andererseits am vorderen Ende ein Füllstück enthält, das ebenfalls in der Betätigungshülse drehfest eingerastet ist. Dieses vordere Füllstück, das im wesentlichen rohrförmige Gestalt hat, enthält die zweiten Halteflächen für die Fangkugeln.

Sowohl das rohrförmige Füllstück als auch der Druckring haben Durchgangsöffnungen die an die Außenkontur des Grundkörpers angepasst sind, um eine Verdrehsicherung zu gewährleisten.

Die Laschen an denen die hinteren Stützflächen ausgebildet sind haben eine Breite, die deutlich kleiner ist, als der Abstand zwischen den Zylinderstiften derjenigen Stellung in der Sie am dichtesten beieinander liegen.

Damit die Fangkugeln auch mit Sicherheit dann einrasten, wenn die Zylinderstifte sich der Freigabestellung nähern, liegen sie bei eingeführtem Stecker im hinteren Ende der parallel zum Grundkörper liegenden Langlöcher. Sie befinden sich dann am'Übergang zwischen der hinteren und der vorderen Stützfläche.

Beim Einführen des Steckers werden die Zylinderstifte von der am Stecker vorhandenen Rippe nach hinten gedrängt, wodurch sich ihr Abstand in den schräg zueinander verlaufenden Langlöchern vergrößert um die Rippe passieren zu lassen. Gleichzeitig werden die Fangkugeln nach außen gedrückt, was aufgrund der Bemessung der Betätigungshülse eine Bewegung der äußeren Betätigungshülse in eine Richtung entgegen der Einführbewegung des Steckers zur Folge hat.

Eine solche entgegen gerichtete Bewegung der Betätigungshülse ist unzweckmäßig, da sie die Handhabung behindert.

Wegen des im allgemeinen recht hohen Innendrucks bedarf es einer verhältnismäßig großen Kraft um beim Kuppeln den Stecker in dem Buchsenteil zu verriegeln, wobei gleichzeitig das in dem Buchsenteil enthaltene Ventil geöffnet wird. Der Benutzer ist also gezwungen das Buchsenteil mit der ganzen Hand und großer Kraft festzuhalten. Durch den festen Griff behindert er zwangsläufig die mitgegriffene Betätigungshülse, die sich zum verrasten des Steckers bewegen muss.

Da zum Entriegeln die Betätigungshülse, wie erwähnt, zurückgeschoben werden muss, kann es zu Fehlbedienungen kommen, wenn beim Einstecken versehentlich die Hülse ebenfalls zurückgeschoben wird. Der Stecker kann nicht Einrasten, weil die Verriegelungsstifte durch die Betätigungshülse in der Entriegelstellung festgehalten werden.

Außerdem ist die Betätigungskraft zum Entriegeln verhältnismäßig hoch. Auf ihren Verriegelungsstiften lastet eine Kraft, die der wirksamen Querschnittsfläche des Steckers und dem herrschenden Druck proportional ist. Die Betätigungshülse lässt sich erst verschieben, wenn eine noch größere Kraft aufgebracht wird.

Um den Stecker aus der Entlüftungsstellung frei zu bekommen ist die Betätigungshülse in Richtung auf den Stecker zu ziehen. Ein solche nach vorne gerichtet Bewegung kann unter Umständen auch durch die in den Innenraum der Betätigungshülse strömende Luft bewirkt werden. Der Stecker wird dadurch mit voller Wucht herausgeschleudert.

Ausgehend hiervon ist es Aufgabe der Erfindung ein neuartiges Buchsenteil für eine Fluidkupplung zu schaffen.

Diese Aufgabe wird mit dem Buchsenteil mit den Merkmalen der Ansprüche 1 oder 25 gelöst.

Bei den neuen Buchsenteilen der Schlauchkupplung geschieht die Freigabe aus der Entlüftungsstellung durch Drehen der Betätigungshülse. Je nach sonstiger Gestaltung kann das Entriegeln entweder auch durch eine Drehbewegung oder durch eine Schiebebewegung bewirkt werden. Der wesentliche Vorteil der Drehbewegung der Betätigungshülse um den Stecker aus der Entlüftungsstellung frei zu bekommen, besteht in der Sicherheit der Kupplungsverbindung. Bei den Buchsenteilen nach dem Stand der Technik, bei denen die Freigabe aus der Entlüftungsstellung durch Schieben der Betätigungshülse erfolgt, besteht immer die Gefahr, dass die Luft, die nach dem Entriegeln abströmt, auch die Betätigungshülse in eine solche Richtung bewegt, in der der Stecker freigegeben wird. Diese Situation wird gelegentlich als Herausschießen des Steckers bezeichnet und ist nicht ungefährlich.

Das Drehen der Betätigungshülse vermeidet diese Gefahrenquelle vollständig. Die einströmende Luft vermag zwar die Hülse gegen irgendeinen der vorhandenen axialen Anschläge zu pressen, ist aber nicht in der Lage, die Hülse auf dem Buchsenkörper zu drehen. Somit kann der Stecker aus der Buchse nur freigegeben werden, wenn manuell die Betätigungshülse auf dem Buchsenteil gedreht wird. Dabei werden Bedienungsfehler ausgeschlossen, wenn bei der Ausführungsform mit Schiebebetätigung zum Entriegeln eine Verriegelungseinrichtung vorhanden ist, die bei eingeschobenem Stecker ein Drehen in der Betätigungshülse blockiert. Hierdurch befindet sich zwangsweise die Betätigungshülse in einer Stellung, in der nur das Bewegen der Verriegelungsstifte möglich ist, während die Fangkugeln in der Fangstellung gehalten sind.

Die Verriegelungseinrichtung umfasst zweckmäßigerweise ein Verriegelungsglied, das dazu eingerichtet ist, die Steckerposition abzufühlen. Lediglich bei eingeschobenem Stecker muss die betreffende erste Position sichergestellt sein, in der die Fangkugeln in der Fangstellung gehalten sind.

Als Verriegelungskörper kann im einfachsten Falle eine Kugel verwendet werden, die in einer entsprechenden radialen Bohrung des Grundkörpers sitzt. Die radiale Bohrung befindet sich auf einer Höhe, in der die Haltenut des Steckers zu liegen kommt, wenn sich dieser in der Entlüftungsstellung befindet.

Der Betätigungskomfort wird erhöht, wenn eine Rückdreheinrichtung vorhanden ist, die dazu eingerichtet ist, die Betätigungshülse aus der Stellung, in der die Fangkugeln gelöst sind, in die Neutralstellung zurückzudrehen, in der ein Verriegeln des Steckers ohne weiteres möglich ist.

Die Rückdreheinrichtung kann die Druckringanordnung beinhalten. Diese setzt sich hierzu aus zwei in axialer Richtung aneinander anliegenden Ringen zusammen, wobei der eine eine Schrägfläche und der andere eine entsprechende Nase aufweist. Aufgrund des Zusammenwirkens der Nase mit der Schrägfläche wird unter dem Einfluss der Feder die geringste axiale Ausdehnung der Druckringanordnung erzeugt. Hierdurch werden die Ringe gegeneinander in eine Vorzugslage gedreht. Mit Hilfe einer drehfesten Kupplung eines der Ringe mit der Betätigungshülse kann die Drehung auf die Betätigungshülse übertragen werden. Bei sägezahnförmiger Gestaltung ist in einer Drehrichtung eine Kraftübertragung von der Betätigungshülse auf die Verriegelungsstifte möglich.

Die Herstellung des Grundkörpers vereinfacht sich, wenn er weitgehend rotationssymmetrisch ausgestattet ist.

Außerdem kann er sich aus einem vorderen oder hinteren Abschnitt zusammensetzen, die formschlüssig miteinander verbunden sind. Hierdurch ist es möglich in dem Grundkörper auf einfache Weise das Ventil unterzubringen.

Eine besonders sichere Verankerung des Steckers wird erreicht, wenn zwei Schlitze in dem Buchsenteil enthalten sind, von denen jeder einen Verriegelungsstift enthält.

Ferner können auch zwei Langlöcher vorgesehen sein, von denen jeder einen Fangkörper aufnimmt.

Die Langlöcher sind vorteilhafterweise so gestaltet, dass die als Kugeln ausgeführten Fangkörper nicht nach innen in den Kanal hineinfallen können. Die Betätigungshülse kann ein Kunststoffspritzteil sein und besteht zweckmäßigerweise aus zwei Teilen, damit sie in entsprechender Weise in ihrem Inneren das Widerlager für die Feder aufnehmen kann und in axialer Richtung gesichert auf dem Grundkörper sitzt.

Bei der Ausführungsform, bei der sowohl das Entriegeln der Verriegelungsstifte als auch das Lösen der Fangstellung durch Drehen der Betätigungshülse bewerkstelligt wird, kann die Mitnahmeeinrichtung für die Verriegelungsstifte von einem Fortsatz gebildet sein, der sich im Inneren der Betätigungshülse befindet und radial nach innen vorspringend vorgesehen ist. Der Fortsatz weist eine Breite in Umfangsrichtung auf, die bei der Verwendung von zwei Verriegelungsstiften mit geringem Spiel zwischen die über die Außenumgangsfläche des Buchsenteils überstehenden Ende der beiden Verriegelungsstifte passt. Auf diese Weise wirken die Verriegelungsstifte gleichzeitig als Mittel um die Betätigungshülse zwischen der zweiten und der dritten Stellung zu zentrieren.

Im übrigen sind Weiterbildungen der Erfindung Gegenstand von Unteransprüchen. Dabei sollen auch solche Merkmalskombinationen als beansprucht angesehen werden, auf die kein ausdrückliches Ausführungsbeispiel gerichtet ist.

In der Zeichnung sind Ausführungsbeispiele des Gegenstandes der Erfindung dargestellt. Es zeigen:
- Fig. 1: eine Explosionsdarstellung der wesentlichen Teile des erfindungsgemäßen Buchsenteils in einer perspektivischen Darstellung,
- Fig. 2: die Betätigungshülse in einer Stirnansicht,
- Fig. 3-7: den Buchsenteil nach Fig. 1, in einem Längsschnitt, in Verbindung mit einem Stecker in unterschiedlichen Betriebsstellungen,
- Fig. 8: ein weiteres Ausführungsbeispiel des erfindungsgemäßen Buchsenteils in einer perspektivischen Darstellung und
- Fig. 9: die Betätigungshülse des Buchsenteils nach Fig. 3, in einer Stirnansicht.

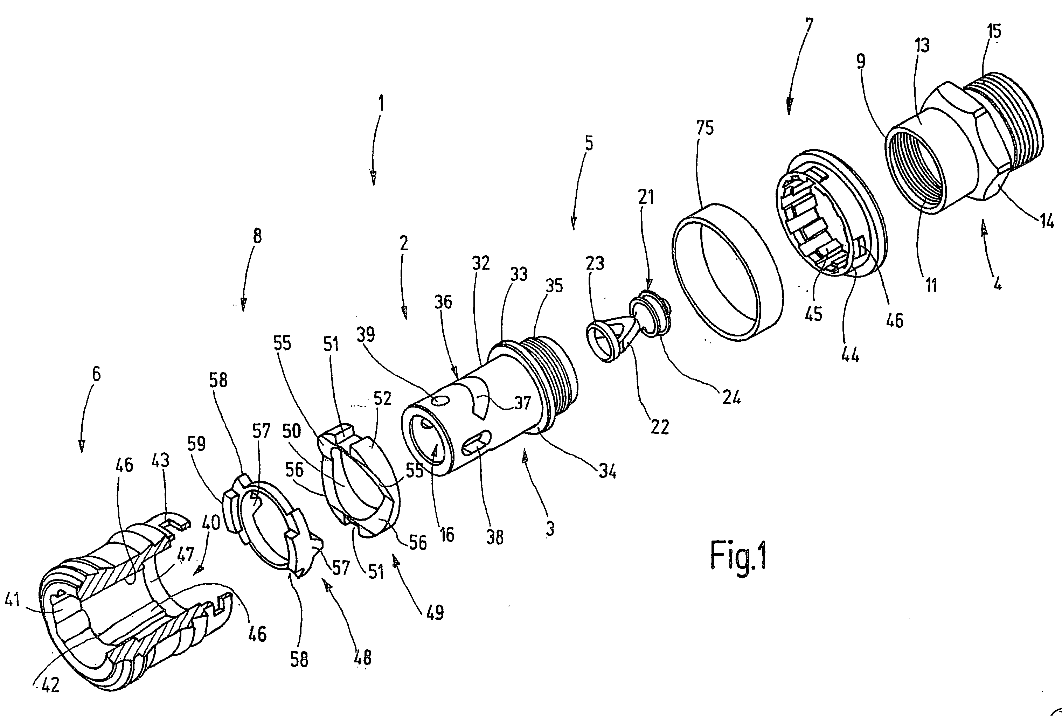

Fig. 1 zeigt in einer perspektivischen Explosionsdarstellung einen Buchsenteil 1 einer Entlüftungskupplung. Zu dem Buchsenteil 1 gehören ein Grundkörper 2, der sich aus einem vorderen Grundkörperabschnitt 3 sowie einem hinteren Grundkörperabschnitt 4 zusammensetzt, ein Ventilverschlussglied 5, eine Betätigungshülse 6 mit deren Abschluss- oder Endring 7 sowie eine Druckringanordnung 8.

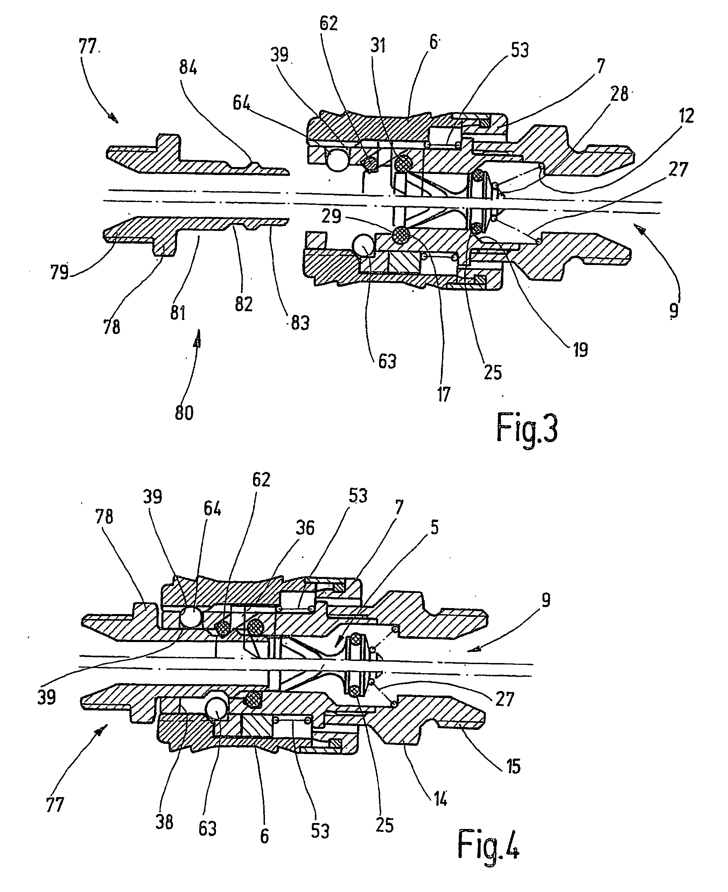

Der hintere Grundkörperabschnitt 4 ist ein im wesentlichen rohrförmiges Gebilde mit einem rotationssymmetrischen Durchlass 9, der an seinem vorderen Ende ein Innengewinde 11 aufweist. Im Inneren verjüngt sich der Durchlass 9 an einer in Fig. 3 erkennbaren Ringschulter 12 zur Rückseite hin.

Auf der Außenseite bildet der hintere Grundkörperabschnitt 4 eine zylindrische, zu dem Durchlass 9 konzentrische Umfangs- und Gleitfläche 13, die am hinteren Ende in einen Sechskantbund 14 übergeht. An den Sechskantbund 14 schließt sich ein Außengewinde 15 an, über das die Entlüftungskupplung 1 mit einem Rohr- oder Schlauchleitungssystem zu verbinden ist, das mit einer Quelle für Druckluft in Verbindung steht.

Der vordere Grundkörperabschnitt 3 ist ebenfalls rohrförmig und ist mit einem rotationssymmetrischen Kanal 16 versehen.

Der Kanal 16 hat bis zu einer wiederum in Figur 3 erkennbaren Schulter 17 einen konstanten Querschnitt. An der Schulter 17 verjüngt sich der Durchmesser des Kanals 16 sprunghaft auf einen kleineren Durchmesser, ab dem der Kanal 16 ebenfalls zylindrisch ist und mit konstantem Durchmesser bis zu einer Kegelfläche 19 durchgeht, die als Ventilsitzfläche dient. Im Anschluss an die Ventilsitzfläche 19 erweitert sich der Kanal 16 erneut auf einen Durchmesser den der Durchlass 9 am vorderen Ende aufweist.

In dem dem hinteren Grundkörperabschnitt 4 zugekehrten Abschnitt des Kanals 16 steckt das Ventilverschlussglied 5. Von einem geschlossenen Boden 21 geht ein V-förmig gegabelter Steg 22 aus, der den Boden 21 mit einem zylindrischen Führungsring 23 verbindet, dessen Außendurchmesser so bemessen ist, dass das Ventilverschlussglied 5 mit geringem Spiel in dem hinteren Abschnitt des Kanals 16 verschieblich ist. In den Außenumfangsflächen des Bodens 21 befindet sich eine Ringnut 24 zur Aufnahme eines O-Rings 25, der mit der kegelförmigen Dichtfläche 19 zusammenwirkt.

Um das Ventilverschlussglied 5 in die Schließstellung vorzuspannen, ist eine Kegelfeder 27 vorgesehen, die sich einends auf der Schulter 12 abstützt und anderenends gegen die Rückseite des Bodens 21 wirkt, wo sie mit Hilfe eines Zentrieransatzes 28 radial zentriert ist.

Der Führungsring 23 ist auf seiner Außenseite zylindrisch glatt und führt im geschlossenen Zustand mit geringem Spiel durch einen O-Ring 29, der in einer Nut 31 sitzt, die unmittelbar an die Schulterfläche 17 wie in Figur 3 gezeigt anschließt.

Der vordere Grundkörperabschnitt 3 weist in seinem vorderen Abschnitt eine zylindrische Außenumfangsfläche 32 auf, die bis zu einem Bund 33 einen konstanten Querschnitt hat. Der Bund 33 bildet einen nach vorne gerichtete radiale Ringschulter 34.

An den Ringbund 33 schließt sich ein Außengewinde 35 an, mit dem der vordere Grundkörperabschnitt 3 in das Innengewinde 11 des hinteren Grundkörperabschnittes 4 eingeschraubt ist. Im Bereich der Außenumfangsfläche 32 sind zwei schrägverlaufende Schlitze 36 enthalten, die sich bezüglich der Längs- oder Rotationsachse des Grundkörpers 2 diametral gegenüberliegen. Die Schlitze 36 ragen jeweils nur ein kurzes Stück in den Kanal 16.

Die beiden Schlitze 36, von denen wegen der Darstellung lediglich einer in Figur 1 erkennbar ist, sind schräg verlaufende Schlitze. Jeder der beiden Schlitze 36 wird von zwei parallel zueinander verlaufenden Seitenfläche 37 begrenzt. Die durch die Seitenwände 37 definierten Flächen der beiden Schlitze 36 konvergieren in Richtung auf das vordere Ende, wie dies der Querschnitt nach Fig. 3 erkennen läßt.

Symmetrisch zwischen den beiden Schlitzen 36 befinden sich ebenfalls diametral zueinander zwei Langlöcher 38, deren Längsachse parallel zu der Rotationsachse des Grundkörpers 2 liegt. Die Seitenwände der Langlöcher 38 sind konvergierend ausgebildet, damit die lichte Weite auf der Seite des Kanals 16 kleiner ist als auf der Seite der Außenumfangsfläche 32. Die genaue Lage der Langlöcher 38 bezogen auf die Schlitze 36 ergibt sich aus der nachfolgenden Funktionsbeschreibung.

Auf der Höhe des vorderen Endes (links in der Figur) der beiden Langlöcher 38 ist mittig zwischen diesen 38 eine Bohrung 39 enthalten, die sich ebenfalls zu dem Kanal 16 hin verjüngt.

Auf dem Grundkörper 2 sitzt verschieblich die rohrförmige Betätigungshülse 6, die einen im Wesentlichen zylindrischen Innenraum 40 aufweist, der sich am vorderen Ende an einem nach innen ragenden Ringbund 41 radial verjüngt, der eine nach hinten zeigende Schulter 42 bildet. Im hinteren Bereich der Betätigungshülse 6 sind mehrere Rastöffnungen 43 vorgesehen, die sich äquidistant längs dem Umfang verteilen.

Im montierten Zustand steckt in dem hinteren Ende der Betätigungshülse 6 der Abschluss- oder Endring 7, der einen zylindrischen Fortsatz 44 aufweist. Der zylindrische Fortsatz 44 sitzt drehfest in dem Innenraum 40 und geht an seinem von der Betätigungshülse 6 abliegenden Ende in einen nach außen ragenden Ringbund über.

Der zylindrische rohrförmige Fortsatz 44 ist an seiner Innenseite mit einer Vielzahl äquidistant verteilter Rippen 45 versehen, die eine Zylinderfläche begrenzen, deren Durchmesser an den Durchmesser der Zylinderfläche 13 angepasst ist. Der Ring 7 ist auf der Zylinderfläche 13 verschieblich.

Um den Ring 7 mit der Betätigungshülse 6 zu verrasten, trägt der Fortsatz 44 an seiner Umfangsfläche eine Reihe von Rastnasen 46, die mit den Rastöffnungen 43 zusammenpassen, wie dies der Querschnitt in Fig. 3 erkennen läßt.

Der Innenraum 40 trägt auf seiner zylindrischen Innenfläche zwei in Axialrichtung verlaufende Rippen 46 mit rechteckigem Querschnitt. Die Rippen 46 liegen sich diametral gegenüber und beginnen bei dem Ringbund 42. Sie reichen bis zu einer Ausdrehung 47, die den zylindrischen Fortsatz 44 des Abschlussrings 7 aufnimmt. Die beiden Rippen 46 wirken mit der Druckringanordnung 8 zusammen, die sich aus einem Betätigungsring 48 und einem Kuppelring 49 zusammensetzt. Die lichte Weite zwischen ihnen entspricht dem Durchmesser des Ringbunds 41, d.h. sie gehen glatt in diesen über.

Der Kuppelring 49, dessen Außendurchmesser dem Innendurchmesser der zylindrischen Innenumfangsfläche des Innenraumes 40 entspricht, enthält eine zylindrische Bohrung 50. Ihr Durchmesser stimmt mit dem Durchmesser der Zylinderfläche 32 überein. In seiner Außenumfangsfläche enthält der Kuppelring 2 in axialer Richtung verlaufende im Querschnitt rechteckige durchgehenden Nuten 51, durch die mit geringem Spiel die beiden Rippen 46 hindurchgleiten können.

Der Kuppelring 49 wird an seiner Rückseite von einer planen Ringfläche 52 begrenzt, an der eine in Figur 3 zu erkennende Druckfeder 53 anliegt, die sich gegen die Schulter 34 abstützt. Die nach vorne gekehrte Seite des Kuppelrings 49 ist mit einer querverlaufenden Rinne versehen, die zwei V-förmig divergierende ebene Nockenflächen 55 und 56 entstehen lässt. Mit jeder Nockenfläche 56 korrespondiert eine weitere Nockenfläche 56 auf der diametral gegenüberliegenden Seite ebenso wie dies für die Nockenfläche 55 zutrifft. Die Nockenflächen 55, 56 sind wie gezeigt mit gleichem Winkel gegenüber einer Ebene geneigt, die Mittelachse der Bohrung 50 enthält.

Der Betätigungsring 48 ist auf seiner dem Kuppelring 49 zugekehrten Seite mit zwei Nasen 57 versehen, die mit den Nockenflächen 55 und 56 zusammenwirken. Er enthält ferner in seiner Umfangsfläche zwei in Umfangsrichtung verlaufende Aussparungen 58, die verhindern sollen, dass bei einer Drehung der Betätigungshülse 6 die Rippen 46 mit dem Betätigungsring 48 kollidieren. Im übrigen entspricht der Außendurchmesser des Betätigungsrings 48 dem Außendurchmesser des Kuppelrings 49.

Auf seiner nach vorne zeigenden Seite trägt der Kuppelring zwei vorstehende Fortsätze 59, deren Innenseiten gegenüber der Bohrung in dem Betätigungsring 48 geringfügig zurückspringen. Das Maß, um das diese Flächen zurückspringen, ergibt sich aus der weiter unten angegebenen Funktionsbeschreibung.

Schließlich gehören zu dem Buchsenteil 1 zwei zylindrische Verriegelungsstifte 62 sowie zwei Fangkugeln 63 und eine Steuerkugel 64. Die zylindrischen Verriegelungsstifte 62 liegen in den Schrägschlitzen 36 und sind in der Länge so bemessen, dass sie bei ihrem maximalen radialen zulässigen Hub die Innenwand des Innenraums 40 der Betätigungshülse 6 gerade eben berühren. Sie verlaufen im montierten Zustand tangential zu dem zylindrischen Innenraum 40 und rechwinklig zu der Längsachse des Buchsenteils 2, wie dies Figur 1 erkennen lässt. Zwischen ihnen liegen die Fortsätze 59, die zwischen den Enden der Verriegelungsstifte 62 ein geringes Spiel haben. Auf diese Weise wird der Betätigungsring 48 in Umfangsrichtung lagerichtig positioniert gehalten.

Die Fangkugeln 63 befinden sich in den Langlöchern 38, und zwar in jedem Langloch eine. Ihr Durchmesser ist derart festgelegt, dass sie aufgrund der Konizität der Langlöcher 38 nicht in den Kanal 16 fallen können. Ihr Durchmesser ist außerdem größer als die Wandstärke des vorderen Grundkörperabschnitts 3 im Bereich der Langlöcher 38. Sie stehen somit entweder in den Kanal 16 vor, wenn sie mit der Außenumfangsfläche 32 bündig sind, oder sie stehen über die Außenumfangsfläche 32 über, wenn sie nicht in das Lichtraumprofil des Kanals 16 ragen.

Der Durchmesser der Fangkugeln 63 ist größer als der Durchmesser der Verriegelungsstifte 62.

Die Steuerkugel 64 steckt schließlich in der Radialbohrung 39. Sie wirkt mit in Längsrichtung verlaufenden Nuten zusammen, die in dem Bund 41 ausgebildet sind, und hat denselben Durchmesser wie die Fangkugeln 63.

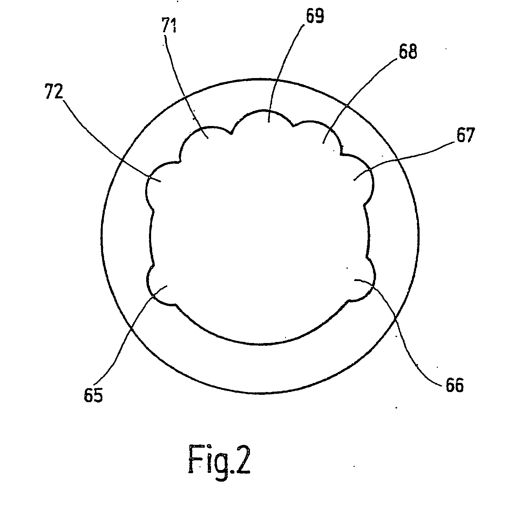

Figur 2 zeigt die Stirnansicht der Betätigungshülse 6. Wie dort zu erkennen ist, enthält der Bund 41 insgesamt 7 in axialer Richtung verlaufende rinnenförmige Nuten 65... 72 mit teilkreisförmigem Querschnitt. Die Nuten 66 und 72 liegen sich bzgl. der Längsachse der Betätigungshülse 6 diametral gegenüber, ebenso wie sich die Nuten 65 und 67 diametral gegenüberliegen. Die Nuten 66 und 67 bzw. die Nuten 65 und 72 liegen in Umfangsrichtung voneinander beabstandet beidseitig einer Ebene, die durch die beiden Rippen 46 verläuft.

Die Nut 69 liegt mittiger zwischen den Nuten 67 und 72, während die Nuten 68 und 71 zwischen den Nuten 69 und 72 bzw. 69 und 67 angeordnet sind. Die Nut 69 verläuft in Verlängerung einer der Rippen 46, deren radialer Abstand von der Längsachse so bemessen sit, dass sie nicht in das Lichtraumprofil der Nut 69 ragt. Die Nuten 65 ... 72 erstrecken sich gegen die gesamte Länge des Bunds 41. Die genaue relative Lage der Nuten 65...72 ergibt sich aus der nachfolgenden Funktionsbeschreibung.

Die Montage des Buchsenteils 1 geschieht wie folgt:

Der vordere Grundkörperabschnitt 3 wird zunächst mit dem O-Ring 29 versehen; sodann wird in den rückwärtigen Teil des Kanals 16 das mit dem O-Ring 25 versehene Ventilverschlussglied 5 mit dem Führungsring 23 voraus eingesteckt, bis es die Lage einnimmt, wie sie Fig. 3 zeigt.

Auf den zylindrischen Abschnitt 13 wird der Abschlussoder Endring 7 aufgesteckt und zwar so, dass sein rohrförmiger Fortsatz 44 von dem Sechskant weg zeigt. Anschließend wird die Kegelfeder 27 in den Durchlass 9 des hinteren Grundkörperabschnitts 4 eingelegt und es werden die beiden Grundkörperabschnitte 3 und 4 mittels der Gewinde 11 und 35 miteinander verschraubt. Auf den so vorbereiteten Grundkörper 2 wird die Druckfeder 53 aufgeschoben, sowie die Druckringanordnung 8. Anschließend werden nach Zusammendrücken der Feder 53 die beiden Verriegelungsstifte 62 in die Schlitze 36 eingelegt. Nach dem Entspannen der Anordnung stehen die Verriegelungsstifte 62 mit ihren Enden über die Außenumfangsfläche des zylindrischen Abschnitts 32 über. Die beiden Fortsätze 59 befinden sich zwischen den überstehenden Enden der beiden Verriegelungsstifte 62 und zwar befindet sich ein Fortsatz 59 zwischen den überstehenden Enden beider Verriegelungsstifte 62. Die Länge der Fortsätze 59 in Umfangsrichtung ist derart bemessen, dass sie die Verriegelungsstifte 62 nicht daran hindern, den Grund der Nut 36 zu erreichen.

Als letzte Maßnahme vor dem Aufschieben der Betätigungshülse 6 werden die drei Kugeln, die Fangkugeln 63 und die Steuerkugel 64 in die zugehörigen Löcher 38 bzw. 39 eingesetzt, sodann wird die Betätigungshülse 6 übergestreift, und mit dem Abschluss- oder Endring 7 verrastet, der zwischen dem Bund 33 und dem Sechskant 14 des hinteren Buchsenteils 4 gefesselt ist. Die Rastlöcher in der Betätigungshülse 6 können.gegebenenfalls durch einen Abdeckring 75 abgedeckt werden.

In dem montierten Zustand liegen die Enden der Verriegelungsstifte 62, wie dies die nachfolgenden Schnittzeichnungen erkennen lassen, an der vorderen Stirnseite des Betätigungsrings 48 an. Die Feder drückt die Druckringanordnung 8 zusammen und gegen die Enden der Verriegelungsstifte 62. Aufgrund der axialen Vorspannung sind die Nasen 57 längs den Schrägflächen 55 und 56 an dem Kuppelring 49 in jene Stellung gelangt, in der die Druckringanordnung 8 die geringste axiale Ausdehnung hat. In dieser Stellung verläuft jede Nut 51 etwa in der Mitte des benachbarten Verriegelungsstiftes 62. Da die Betätigungshülse 6 über die Nuten 51 und die Rippen 46 in Umfangsrichtung formschlüssig mit der Druckringanordnung 8 gekuppelt ist, jedoch nach wie vor axial verschieblich, wird durch den Kuppelring 49 auch die Betätigungshülse 6 in die richtige Stellung gedreht. In dieser Stellung fluchtet die Nut 69 mit der Steuerkugel 64, während die beiden Nuten 66 und 67 beidseits einer länglichen Öffnung 38 und die anderen beiden Nuten 65 und 72 beidseits des anderen Langloches 38 stehen, d.h. den Langlöchern 38 liegt keine Nut gegenüber.

Diese Stellung ist die Ruhe- oder Nullstellung der Betätigungshülse 6.

Ausgehend von der Ruhestellung kann die Betätigungshülse 6 in Richtung auf den hinteren Grundkörperabschnitt 4 verschoben werden. Das Verschieben geschieht gegen die Wirkung der Druckfeder 53. Bei dieser Bewegung wird die Druckringanordnung 8 mit längs verschoben, weil die Schulter 42 in der Ruhestellung unmittelbar an die in axialer Richtung nach vorne zeigenden freien Enden der Fortsätze 59 anliegt. Die Verriegelungsstifte liegen in dem Spalt zwischen der Schulter 42 und der vorderen Stirnfläche des Betätigungsrings neben den Fortsätzen 59.

Ebenfalls ausgehend von der oben erwähnten Null- oder Ruhestellung der Betätigungshülse 6, kann sie auch in Umfangsrichtung gedreht werden und zwar nach beiden Seiten. Beim Drehen der Betätigungshülse 6 wird der Kuppelring 49 formschlüssig mitgenommen, während der Betätigungsring 48 in Ruhe bleibt. Die Drehbewegung findet in jeder der beiden Richtungen ein Ende, sobald die Rippe 46 am Ende der Aussparung 58 ankommt, bzw. an das betreffende überstehende Ende des jeweiligen Verriegelungsstiftes 62 anstößt.

Die Aussparungen 58 sind so bemessen, dass sie in dem Drehbereich dazwischen eine Rotation der Betätigungshülse 6 auf dem Grundkörper 2 nicht behindern.

In der gedrehten Stellung fluchten entweder die Nuten 65 und 67 mit den beiden Langlöchern 38 oder beim Drehen in entgegengesetzter Richtung die Nuten 66 und 72. Außerdem fluchtet in der gedrehten Stellung entweder die Nut 68 oder die Nut 71 mit der Bohrung 39, in der die Steuerkugel 64 sitzt. Welche der beiden Nuten 68 oder 71 mit der Bohrung 39 fluchtet, hängt von der gewählten Drehrichtung ab.

Die Funktion wird nachstehend anhand der Fig. 3 bis 7 erläutert. Bei der Betrachtung der Figuren ist zu berücksichtigen, dass in der oberen Hälfte jeder Figur der Buchsenteil 1 in einer Richtung senkrecht zu betreffenden Verriegelungsstift 62 geschnitten ist, während im unteren Teil jeder Figur der Schnitt durch eines der beiden Langlöcher 38 führt. In dem oberen Teil jeder Figur ist deswegen auch die Steuerkugel 64 in ihrer Bohrung 39 zu erkennen. Die Schnittflächen im oberen und unteren Teil jeder Figur stehen also an sich im Winkel von 90° zueinander.

Fig. 3 zeigt die Ruhestellung vor dem Einführen eines Steckers 77. Der Stecker 77 ist im Wesentlichen rohrförmig und weist, bezogen auf seine Länge in der Mitte einen Sechskantbund 78 auf, der zur Rückseite in ein Anschlussgewinde 79 übergeht. Nach vorne hin geht der Sechskantbund 78 in einen zylinderförmigen rohrförmigen Ansatz 80 über. Der Ansatz 80 bildet nacheinander einen dicken Abschnitt 81, eine umlaufende im Querschnitt trapezförmige Ringnut 82 und einen verjüngten Abschnitt 83 an dem freien Ende. Hierdurch entsteht eine Rippe 84, die in Umfangsrichtung geschlossen ist und deren Außendurchmesser so groß wie der Abschnitt 81 ist, jedoch etwas kleiner ist als der Durchmesser in dem weiten Teil des Kanals 16.

Die Schrägschlitze 36 sind derart gestaltet, dass die Verriegelungsstifte 62 zueinander parallel verlaufen, wenn sie sich auf dem Grund der Schlitze 36 befinden. Sie haben dann einen minimalen Abstand voneinander, der etwa dem Durchschnitt des Abschnittes 82 entspricht, jedoch kleiner ist, als der Außendurchmesser der Rippe 84.

Das Einführen des Steckers 77 erfolgt in der Ruhestellung der Betätigungshülse 6. Beim Einführen des Steckers 77 drückt die Rippe 84 zunächst die Steuerkugel 64 aus dem Lichtraumprofil des Kanals 16 zurück. Dieses Zurückdrücken ist möglich, weil sich die Nut 69 unmittelbar über der Rückseite der Kugel 64 befindet. Durch das weiter Eindrücken des Steckers 77 werden sowohl die Fangkugeln 63 als auch die Verriegelungsstifte 62 radial nach außen bewegt. Sollten sich die Fangkugeln 63 zunächst auf dem Ringbund 41 befinden, werden sie von der Rippe 84 soweit nach innen geschoben, bis sie in den Bereich der Fortsätze 59 gelangen.

Die Fortsätze 59 weisen eine innenliegende Fläche auf, die hinreichend von der Außenumfangsfläche 32 beabstandet ist, damit die Fangkugeln 63 aus dem Lichtraumprofil des Kanals 16 zurückweichen können. Das weitere Einschieben des Steckers 77 führt schließlich zu einem Zurückschieben des Ventilverschlussglieds 5, das entsprechend geöffnet wird.

Im eingesteckten Zustand, den Figur 4 zeigt, befindet sich der Abschnitt 83 des Steckers 77 abdichtend in dem O-Ring 29, während das Ventil geöffnet ist, d.h. der O-Ring 25 ist von der Ventilsitzfläche 19 abgehoben. die Verriegelungsstifte 62 sind hinter der Rippe 84 verrastet. Die Axialkraft, die auf den Stecker 67 wirkt, ist bestrebt, die hinter der Rippe 84 gefangenen Verriegelungsstifte 62 gegen den Grund des zugehörigen Schlitzes 36 anzupressen.

Außerdem wird die Steuerkugel 64 durch den Abschnitt 81 des rohrförmigen Fortsatzes 80 radial so weit nach außen gedrückt, bis die Steuerkugel 64 in die Nut 69 eindringt. In Verbindung mit der Bohrung 69 verhindert die Steuerkugel 64 ein Drehen der Betätigungshülse 6 auf den Buchsenkörper 2. Die einzige Bewegungsmöglichkeit, die der Betätigungshülse 6 bleibt, ist ausgehend von der Ruhestellung eine translatorische Bewegung in Richtung auf den Sechskantbund des Grundkörpers 2.

In dieser Stellung ist außerdem der Spalt zwischen dem Abschnitt 81 des Steckers 77 und dem Innendurchmesser des Bunds 41 derart, dass die Fangkugeln 63 sich zwangsläufig in jenem Bereich der Langlöcher 38 befinden müssen, der radial nach innen von der Ringnut 83 und radial nach außen im Wesentlichen durch die Innenseite der Fortsätze 59 überdeckt wird.

Das Entriegeln des Steckers 77 geschieht, indem ausgehend von der Ruhestellung die Betätigungshülse 6 in Richtung auf den Sechskantbund 14 des Grundkörpers 2 also nach hinten verschoben wird. Beim Zurückschieben der Betätigungshülse 6 werden die Verriegelungsstifte 62 von der Schulter 42 ebenfalls nach hinten bewegt. Aufgrund der schrägen Neigung der Schlitze 36 führt dies an der Schrägfläche 37 zu einer radial nach außen gerichteten Bewegung, die die Verriegelungsstifte 62 aus dem Lichtraumprofil 16 des Kanals 16 herausführt. Gleichzeitig läuft auf der Schulter 42 die jeweilige Fangkugel 63 auf den Ringbund 41 auf. Sie liegt in der vollständig zurückgeschobenen Stellung der Betätigungshülse auf einer in Längsrichtung verlaufenden Fläche, zwischen den Nuten 66 und 67 bzw. die andere Kugel zwischen den Nuten 65 und 72.

Die beiden Fangkugeln 63 werden in den Kanal 16 nach innen vorgedrängt und ragen in die Ringnut 82 hinein. Der im Inneren der Kupplung herrschende Druck ist nunmehr in der Lage, den Stecker 77 aus dem Buchsenkörper 2 herauszutreiben. Dabei nimmt die Rippe 84 die Fangkugeln 63 in Richtung auf das vordere Ende des jeweils zugeordneten Langlochs 38 mit. Die Herausbewegung des Steckers 77 findet ihr Ende sobald die Fangkugeln 63 an dem vorderen Ende der Langlöcher 38 ankommen.

In dieser Stellung ist das Ventil über das Ventilverschlussglied 5 zwar geschlossen, jedoch muss sich die Luft aus dem an dem Stecker 77 angeschlossenen Gerät entspannen. Die Luft strömt durch die notwendigerweise vorhandene Spalten und Öffnungen zwischen der Betätigungshülse 6 und dem Grundkörper 2 ab.

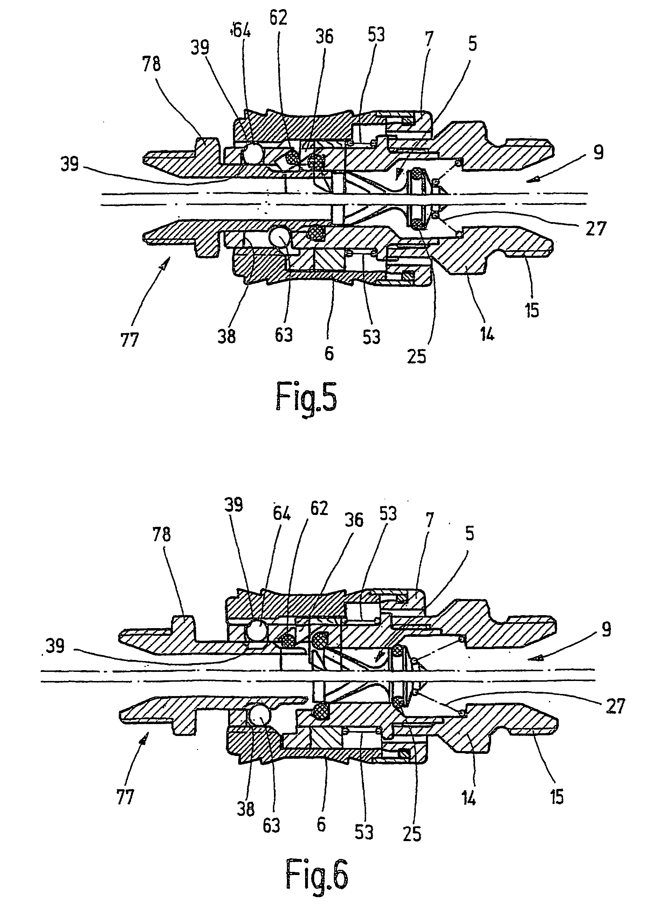

Obwohl unmittelbar nach dem Freigeben des Steckers 77 durch die Verriegelungsstifte 62 ein erheblicher Druck in der Anordnung herrscht, der bestrebt ist, den Stecker 77 herauszuschleudern, wird er in der Entlüftungsstellung gemäß Figur 6 durch die Fangkugeln 63 wirksam gehalten. In der Fangstellung befindet sich außerdem die Steuerkugel 64 im Bereich der Nut 82. Die Steuerkugel 64 kann jetzt in Richtung auf die Nut 82 ausweichen und ein Verdrehen der Betätigungshülse 6 auf dem Buchsenkörper 2 ermöglichen. Sobald die Entlüftung abgeschlossen ist, dreht der Benutzer die in die Ruhestellung zurückgekehrte Betätigungshülse 6 in Umfangsrichtung. Die Steuerkugel 64 wird die Betätigungshülse daran nicht hindern, weil sie in die Nut 82 zurückweichen kann.

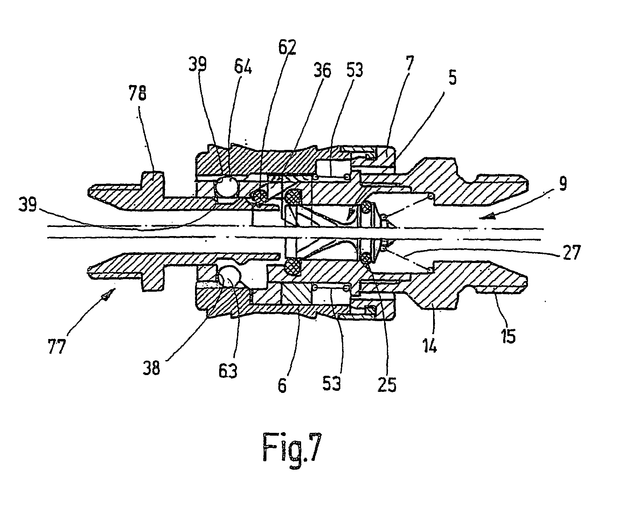

In der vollständig gedrehten Stellung, in der die Rippen 46 an den Rändern der Aussparungen 58 anstoßen, liegen entweder die Nuten 66 und 72 oder Nuten 65 und 67 den Langlöchern 38 gegenüber. Diese Stellung ist in Fig. 7 gezeigt. Ferner steht eine der Nuten 68 oder 71 der Steuerkugel 64 gegenüber. Sämtliche Kugeln 63 und 64 können radial zurückzuweichen, soweit bis sie sich nicht mehr im Lichtraumprofils des Kanals 16 befinden, womit die Rippe 84 die Kugel 63 und 64 passieren kann.

Bei dem zuvor erläuterten Ausführungsbeispiel geschieht das Entriegeln durch eine translatorische Bewegung der Betätigungshülse 6, während das Freigeben oder Lösen der Fangstellung durch eine rotatorische Hülsenbewegung erreicht wird.

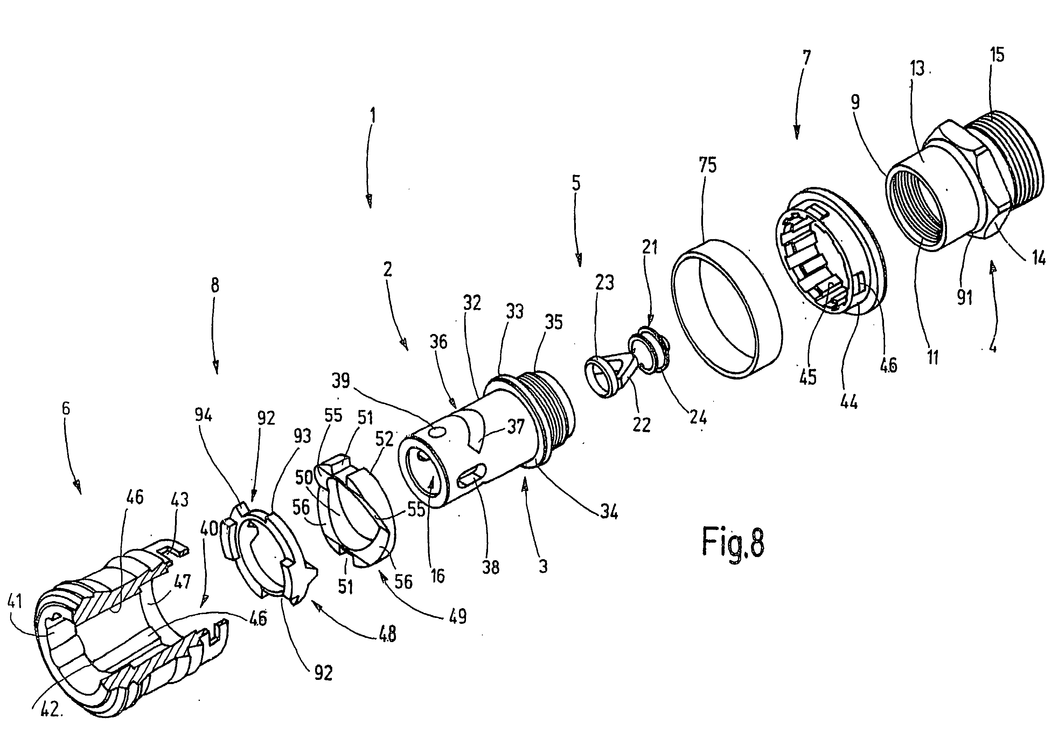

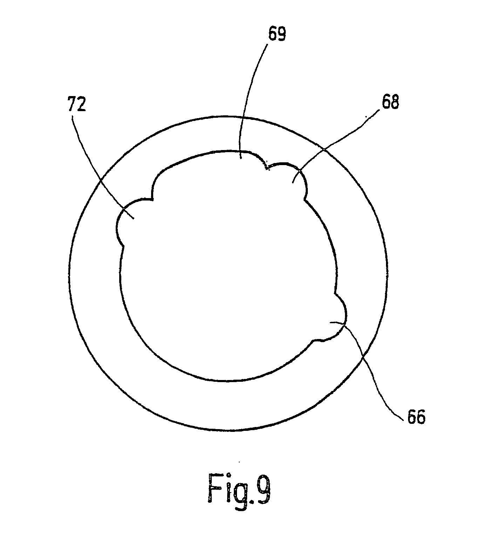

In den Fig. 8 und 9 ist ein Ausführungsbeispiel erläutert, bei dem sowohl das Entriegeln aus der Verriegelungsstellung als auch das Lösen aus der Fangstellung jeweils durch eine rotatorische Bewegung der Betätigungshülse 6 erreicht wird.

Soweit das Ausführungsbeispiel nach den Fig. 8 und 9 Bauelemente aufweist, die mit denen aus dem Ausführungsbeispiel nach Fig. 1 übereinstimmen, werden keine weiteren Erläuterungen gegeben und die selben Bezugszeichen hierfür verwendet.

Durch entsprechende Gestaltung der axialen Länge des zylindrischen Teils 13 des hinteren Grundkörperabschnitts 4 ist dafür gesorgt, dass der Abschluss oder Endring 7 im montierten Zustand zwischen einer Schulterfläche 91 und dem Ringbund 33 axial unverschieblich geführt ist. Der Endring 7 kann sich zwischen der Schulter 91 und dem Bund 33 lediglich in Umfangsrichtung drehen.

Ein weiterer Unterschied betrifft die Ausbildung des Betätigungsrings 48. Bei dem Ausführungsbeispiel nach Figur 1 hatten die Aussparungen 58 eine Länge in Umfangsrichtung gesehen, so dass bei einer Verdrehung der Betätigungshülse 6 zum Lösen der Fangstellung keinesfalls eine Mitnahme des Betätigungsrings erfolgt ist.

Der Betätigungsring 48 nach Fig. 8 weist zwei diametral gegenüberliegende Ausnehmungen 92 auf, die bezüglich der Schlitze 36 etwas unsymmetrisch liegen. Die eine in Umfangsrichtung liegende Schulter 93 steht in der Neutralstellung der Betätigungshülse 6 in unmittelbarer Nähe der Rippe 46. Die andere Schulter 94 hingegen weist in der Neutralstellung einen größeren Abstand von der Rippe 46 auf.

Der weitere Unterschied betrifft die Ausbildung der Nuten in dem Ringbund 41. Wie Fig. 9 zeigt ist die Nut 69 in Umfangsrichtung verbreitert und zwar soweit, dass sie übergangslos in die Nut 71 nach Figur 2 übergeht. Auf diese Weise kann die Steuerkugel 64 ein Verdrehen der Betätigungshülse 6 über die Breite der Nut 69 nicht verhindern.

Schließlich fehlen die Nuten 65 und 67.

Der Zusammenbau des Ausführungsbeispiels nach den Figuren 8 und 9 ist sinngemäß dasselbe, wie er zuvor erläutert ist.

Die Funktionsweise sieht wie folgt aus:

In der Ruhestellung der Betätigungshülse 6, die durch das Zusammenwirken des Kuppelrings 49 mit dem Betätigungsring 48 in der vorerwähnten Weise erzwungen wird, steht die Betätigungshülse in einer Stellung, in der die Nut 69 mit der Bohrung 39 für die Steuerkugel 64 fluchtet. Die Nuten 66 und 72 sind gegenüber den Langlöchern 38 verdreht.

Ausgehend von dieser Stellung ist bei eingestecktem Stecker 77 lediglich ein Verdrehen der Betätigungshülse 6 in einer Richtung möglich, wie sie die verbreiterte Nut 69 ermöglicht, d.h. im vorliegenden Falle, bezogen auf Fig. 6 im Uhrzeigersinn. Hinsichtlich dieser Drehrichtung stehen die Schultern 93 in unmittelbarer Nähe zu den zugehörigen Flanken der Rippen 46. Ein Drehen der Betätigungshülse 6 in dieser Richtung führt dazu, dass die Betätigungshülse 6 den Betätigungsring 48 in der betreffenden Richtung mitdreht.

Die zwischen den überstehenden Enden der Verriegelungsstifte sitzenden Fortsätze 59 nehmen dabei das betreffende Ende des jeweils zugehörigen Verriegelungsstiftes 62 mit. Das andere Ende des betreffenden Verriegelungsstiftes 62 bleibt auf dem Grund des zugehörigen Schrägschlitzes 36 liegen. Aufgrund des schrägen Verlaufes des Schrägschlitzes 36 wirkt dieser wie ein Ausschnitt aus einer Schraubenlinie. Wenn also das betreffende überstehende Ende des Verriegelungsstiftes 62 in Umfangsrichtung bewegt wird, kommt eine windschiefe Lage der Verriegelungsstifte 62 zueinander zustande. Deren Abstand voneinander ist im Mittenbereich gleich oder größer als der Durchmesser des Kanals 16. Die Verriegelungsstifte 62 werden aus dem Lichtraumprofil 16 herausgedrängt. Gleichzeitig verschiebt sich wegen der kombinierten Axialbewegung auch der Betätigungsring 48 entgegen der Wirkung der Druckfeder 53.

Der Stecker 77 kann nunmehr aufgrund des herrschenden Innendrucks aus dem Buchsenteil 1 herausgedrängt werden. Am vollständigen Herausschleudern wird er, wie zuvor, durch die Wirkung der Fangkugeln 63 gehindert. Die Fangkugeln 63 werden durch den Ringbund 41 in einer Lage gehalten, in der sie nach Innen in die Ringnut 82 des Steckers 77 vorstehen.

Wenn der Benutzer die Betätigungshülse 6 loslässt, kann die Druckfeder 53 die Druckringanordnung 8 nach vorne in Richtung auf den Stecker 77 vorschieben. Dabei laufen die beiden Verriegelungsstifte 62 zurück, in eine Stellung, in der sie nicht mehr windschief zueinander liegen wie beim Entriegeln, sondern in einer gemeinsamen Ebene die rechtwinklig zu der Längsachse des Buchsenteils 1 liegt.

Die Betätigungshülse 6 wird von den Schultern 93 bzw. den Nuten 51 in Umfangsrichtung mitgenommen.

Sobald die Entlüftung abgeschlossen ist, kann der Benutzer die Betätigungshülse 6 in der entgegengesetzten Richtung ausgehend von der Ruhestellung in die Stellung zum Lösen der Fangstellung bringen. Hierzu wird die Betätigungshülse 6 im Gegenuhrzeigersinn gedreht. In der Drehendstellung steht die Nut 68 der Bohrung 39 gegenüber. Die darin sitzende Fangkugel 64 kann beim Herausziehen des Steckers 77 radial nach außen zurückweichen, damit die Rippe 84 die Steuerkugel 64 passieren kann.

Beim Drehen der Betätigungshülse 6 in die Position zum Lösen der Fangstellung läuft die Rippe 46 in dem offenen Teil der Aussparung 92 von der Schulter 93 in Richtung auf die Schulter 94. Der Betätigungsring 48 bleibt in Ruhe. Lediglich der Kuppelring 49 wird in Umfangsrichtung mitgenommen, wobei er sich aufgrund des Zusammenwirkens der Nasen 57 mit den Schrägflächen 55 und 56 axial von diesem entfernt.

Sobald der Benutzer die Betätigungshülse 6 freigibt, wird sie in die Ruhestellung zurückgedreht. Das Rückdrehen wird durch den Kuppelring 49 erzwungen, dessen Schrägflächen 55 und 56 an der Nase zurückbleiben, bis die kürzeste axiale Ausdehnung der Druckringanordnung 8 erreicht ist. Über die Nuten 51 und die Rippen 46 wird die Betätigungshülse 6 mitgenommen.

Eine Entlüftungskupplung weist Verriegelungsglieder auf, um den Stecker in der gekuppelten Stellung, in der eine Fluidverbindung herrscht, zu verriegeln. Damit nach dem Lösen der Verriegelung der Stecker nicht herausgeschossen wird, sind Fangglieder vorhanden, die den Stecker solange in der Fangstellung halten, bis durch weiteres Betätigen einer Betätigungshülse der Benutzer die völlige Freigabe des Steckers aus dem Buchsenteil wünscht.

Die Anordnung ist so getroffen, dass ausgehend von einer Ruhestellung die Betätigungshülse zum Entriegeln translatorisch und zum Lösen der Fangstellung rotatorisch bewegt wird. Bei einem anderen Ausführungsbeispiel erfolgen sowohl das Entriegeln durch eine rotatorische Bewegung, als auch das Lösen der Fangstellung durch eine rotatorische Bewegung, jedoch in der entgegengesetzten Richtung erreicht wird.

## Patentansprüche

1. Buchsenteil (1) einer Entlüftungskupplung für Fluidverbindungen,
mit einem einen durchgehenden, geraden und rotationssymmetrischen Kanal (16) enthaltenden Grundkörper (2), der von einer Außenumfangsfläche (32) begrenzt ist und der ein vorderes und ein hinteres Ende bildet, wobei von dem vorderen Ende her ein Stecker (77) in den Kanal (16) einführbar ist,
mit einem in dem Kanal (16) enthaltenen Ventil (5,25), das bei eingeschobenem Stecker (77) von diesem in der geöffneten Stellung gehalten wird,
mit wenigstens einem Schlitz (36) in dem Grundkörper (2), dessen Lichtraumprofil tangential den Kanal (16) schneidet und dessen Wände (37) parallel zu einer Ebene sind, die schräg zu der Längsachse des Kanals (16) ausgerichtet ist,
mit wenigstens einem Verriegelungsstift (62), der sich in dem Schlitz (36) befindet und mit seinen beiden Endabschnitten über die Außenumfangsfläche (32) des Grundkörpers (2) übersteht,
mit wenigstens einem Langloch (38), das von der Außenumfangsfläche (32) ausgehend bis zu dem Kanal (16) reicht und dessen Längsachse zu der Längsachse des Kanals (16) parallel ausgerichtet ist,
mit wenigstens einem Fangköper (63), der in dem Langloch (38) enthalten ist und dessen Abmessungen in radialer Richtung bezogen auf den Grundköper (2) größer ist als die Wandstärke des Grundkörpers (2) im Bereich des Langlochs (38),
mit eine Druckringanordnung (8), die auf dem Grundkörper (2) verschieblich sitzt und mit den Enden des wenigstens einen Verriegelungsstifts (62) zusammenwirkt,
mit wenigstens einer Druckfedereinrichtung (53), die zwischen der Druckringanornung (8) und einem buchsenfesten Widerlager (33) wirksam ist, um die Druckringanordnung (8) in diejenige Richtung vorzuspannen, in der der Verriegelungsstift (62) gegen den Grund des Schlitzes (36) vorgespannt ist,
mit einer auf dem Grundkörper (2) angeordneten und auf dem Grundkörper (2) längsverschieblichen Betätigungshülse (6), deren Innenraum (40) eine Schulter (42) enthält, die zum Zusammenwirken mit den Enden des wenigstens einen Verriegelungsstifts (62) eingerichtet ist, wobei die Betätigungshülse (6) zum Bewegen des wenigstens einen Verriegelungsstifts (62) gegen die Kraft der Feder (53) aus einer ersten in eine zweite Stellung verschieblich und auch zum Freigeben des Fangköpers (63) aus der ersten in eine dritte Stellung drehbar ist,
mit wenigstens einer ersten Stützfläche (41) für den Fangkörper (63), die der Betätigungshülse (6) vorgesehen ist und dazu dient, den Fangkörper (63) in einer in den Kanal (16) vorspringenden Stellung zu halten,
mit wenigstens einer der ersten Stützfläche (41) in Umfangsrichtung benachbarten zweiten Stützfläche (65..72) für den Fangköper (63), die einen größeren radialen Abstand aufweist als die erste Stützfläche (41) und die in der Betätigungshülse (6) vorgesehen ist,
mit einem buchsenfesten Anschlag (33), der dazu dient, ein Verschieben der Betätigungshülse (6) aus der ersten Stellung in eine Richtung zu verhindern, die die der zweiten Stellung entgegen liegt, und
mit einer Verriegelungseinrichtung (39,64), die dazu eingerichtet, ist ein Drehen der Betätigungshülse (6) aus der ersten in die dritte Stellung zu verhindern, wenn sich der Stecker (77) in einer Stellung befindet, in der er durch den Verriegelungsstift (62) gehalten ist.

2. Buchsenteil nach Anspruch 1, **dadurch gekennzeichnet, dass** die Verriegelungseinrichtung (39,64) ein Verriegelungsglied (64) aufweist, das dazu eingerichtet ist, die Steckerposition abzufühlen.

3. Buchsenteil nach Anspruch 1, **dadurch gekennzeichnet, dass** die Verriegelungseinrichtung (39,64) eine radiale Bohrung (39) in dem Grundkörper (2) umfasst, die auf einer Höhe liegt, auf der eine Haltenut (83) des Stecker (77) liegt, der sich in der Entlüftungsstellung befindet.

4. Buchsenteil nach Anspruch 3, **dadurch gekennzeichnet, dass** das Verriegelungsglied (64) von einer Kugel gebildet ist und dass sich die Bohrung (39) zu dem Kanal (16) hin verjüngt.

5. Buchsenteil nach Anspruch 1, **dadurch gekennzeichnet, dass** eine Rückdreheinrichtung (8,53) vorhanden ist, die dazu eingerichtet ist, die Betätigungshülse (6) aus der dritten Stellung in die erste Stellung zurück zu drehen.

6. Buchsenteil nach Anspruch 1, **dadurch gekennzeichnet, dass** die Rückdreheinrichtung (8,53) die Druckringanordnung (8) umfasst.

7. Buchsenteil nach Anspruch 1, **dadurch gekennzeichnet, dass** zu der Druckringanordnung (8) ein Betätigungsring (48), der an dem Verriegelungsstift (62) anliegt und durch diesen drehgesichert ist, und ein Kuppelring (49) gehören, der sich zwischen der Feder (53) und dem Betätigungsring (48) befindet und der gegenüber der Betätigungshülse (6) drehgesichert ist.

8. Buchsenteil nach Anspruch 7, **dadurch gekennzeichnet, dass** entweder der Betätigungsring (48) oder der Kuppelring (49) wenigstens eine in axialer Richtung zeigende Nase (57) und der andere Ring eine korrespondierende v-förmige Nut (55,56) enthält, die gemeinsam unter der Wirkung der Feder (53) ein Rückdrehmoment für die Betätigungshülse (6) erzeugen.

9. Buchsenteil nach Anspruch 7, **dadurch gekennzeichnet, dass** der Kuppelring (49) eine formschlüssige Kupplungseinrichtung (51) aufweist, über die die Betätigungshülse (6) in Umfangsrichtung formschlüssig mit dem Kuppelring (49) gekuppelt ist, die gegenüber dem Kuppelring (49) in axialer Richtung frei verschieblich ist.

10. Buchsenteil nach Anspruch 1, **dadurch gekennzeichnet, dass** die Außenumfangsfläche (32) des Grundkörpers (2) zumindest in einem an dem vorderen Ende beginnenden Abschnitt im wesentlichen rotationssymmetrisch ist.

11. Buchsenteil nach Anspruch 1, **dadurch gekennzeichnet, dass** der Grundkörper (2) aus einem vorderen und einem hinteren Abschnitt (3,4) besteht, die miteinander formschlüssig verbunden sind.

12. Buchsenteil nach Anspruch 1, **dadurch gekennzeichnet, dass** der Kanal (16) ausgehend von seinem vorderen Ende bis hinter den Schlitz (36) zylindrisch mit durchgehend konstantem Querschnitt ist.

13. Buchsenteil nach Anspruch 1, **dadurch gekennzeichnet, dass** zwei Schlitze (36) enthalten sind, die sich bezüglich der Längsachse des Kanals (16) diametral gegenüber liegen und deren Seitenwände (37) Ebenen definieren, die in Richtung auf das vordere Ende konvergieren.

14. Buchsenteil nach Anspruch 1, **dadurch gekennzeichnet, dass** zwei Langlöcher (38) enthalten sind, die sich bezüglich der Längsachse des Kanals (16) diametral gegenüberliegen.

15. Buchsenteil nach Anspruch 1, **dadurch gekennzeichnet, dass** die Weite des Langlochs (38) gemessen rechtwinklig zu dessen Längsachse an der Außenumfangsfläche (32) des Grundkörpers (2) größer ist als auf der Seite des Kanals (16), derart, dass ein in dem Langloch (38) befindlicher Fangköper (64) daran gehindert ist, das Langloch (38) in Richtung auf den Kanal (16) zu passieren, wobei die Abmessungen derart gewählt sind, dass der Fangköper (64) in einer Lage, in der er der Längsachse des Kanals (16) am nächsten benachbart ist, in den Kanal (16) hineinragt.

16. Buchsenteil nach Anspruch 1, **dadurch gekennzeichnet, dass** der Fangköper (64) von einer Kugel gebildet ist.

17. Buchsenteil nach Anspruch 1, **dadurch gekennzeichnet, dass** die Betätigungshülse (6) ein Kunststoffspritzteil ist.

18. Buchsenteil nach Anspruch 1, **dadurch gekennzeichnet, dass** ein vorderer Abschnitt (41) der Betätigungshülse (6) einen geringeren Durchmesser aufweist als ein hinterer Abschnitt.

19. Buchsenteil nach Anspruch 1, **dadurch gekennzeichnet, dass** der Betätigungshülse (6) ein Verschlussring (7) zugeordnet ist.

20. Buchsenteil nach Anspruch 19, **dadurch gekennzeichnet, dass** der Verschlussring (7) mit der Betätigungshülse (6) formschlüssig verbunden ist.

21. Buchsenteil nach Anspruch 20, **dadurch gekennzeichnet, dass** die formschlüssige Verbindung von einer Rastverbindung (44) gebildet ist.

22. Buchsenteil nach Anspruch 21, **dadurch gekennzeichnet, dass** der Verschlussring (7) sich auf jener Seite des Wiederlagers (33) befindet, die von dem vorderen Ende des Grundkörpers (2) abliegt.

23. Buchsenteil nach Anspruch 1, **dadurch gekennzeichnet, dass** die erste und/oder zweite Stützfläche jeweils von einer Nut (65..72) gebildet ist, die Richtung parallel zu der Längsachse des Langlochs (38) verläuft.

24. Buchsenteil nach Anspruch 1, **dadurch gekennzeichnet, dass** die Druckringanordnung (8) an seiner Außenseite zum Durchtritt einer Rippe (46) der Betätigungshülse (6) wenigstens einer Ausnehmung (51) aufweist.

25. Buchsenteil (2) einer Entlüftungskupplung für Fluidverbindungen,
mit einem einen durchgehenden, geraden und rotationssymmetrischen Kanal (16) enthaltenden Grundkörper (2), der von einer Außenumfangsfläche (32) begrenzt ist und der ein vorderes und ein hinteres Ende bildet, wobei von dem vorderen Ende her ein Stecker (77) in den Kanal (16) einführbar ist,
mit einem in dem Kanal (16) enthaltenen Ventil (5,25), das bei eingeschobenem Stecker (77) von diesem in der geöffneten Stellung gehalten wird,
mit wenigstens einem ersten Schlitz (36) in dem Grundkörper (2), dessen Lichtraumprofil tangential den Kanal (16) schneidet und dessen Wände (37) parallel zu einer Ebene sind, die schräg zu der Längsachse des Kanals (16) ausgerichtet ist,
mit wenigstens einem Verriegelungsstift (62), der sich in dem Schlitz (36) befindet und mit seinen beiden Endabschnitten über die Außenumfangsfläche (32) des Grundkörpers (2) übersteht,
mit wenigstens einem Langloch (38), das von der Außenumfangsfläche (38) ausgehend bis zu dem Kanal (16) reicht und dessen Längsachse zu der Längsachse des Kanals (16) parallel ausgerichtet ist,
mit wenigstens einem Fangköper (63), der in dem Langloch (38) enthalten ist und dessen Abmessungen in radialer Richtung bezogen auf den Grundköper (2) größer ist als die Wandstärke des Grundkörpers (2) im Bereich des Langlochs (38),
mit eine Druckringanordnung (8), die auf dem Grundkörper (2) verschieblich sitzt und mit den Enden des wenigstens einen Verriegelungsstifts (62) zusammenwirkt,
mit wenigstens einer Druckfeder (53), die zwischen der Druckringanordnung (8) und einem buchsenfesten Widerlager (33) wirksam ist, um die Druckringanordnung (8) in diejenige Richtung vorzuspannen, in der der Verriegelungsstift (62) gegen den Grund des Schlitzes (36) vorgespannt ist,
mit einer auf dem Grundkörper (2) angeordneten und auf dem Grundkörper (2) unverschieblichen und drehbaren Betätigungshülse (6), die aus einer ersten in eine zweite Stellung und auch aus der ersten in eine dritte Stellung drehbar ist, wobei die erste Stellung zwischen der zweiten und der dritten Stellung liegt,
mit einer Mitnahmeeinrichtung (8), die an die Betätigungshülse (6) angekuppelt ist und zum Zusammenwirken mit den Enden des wenigstens einen Verriegelungsstifts (62) eingerichtet ist,
mit wenigstens einer ersten Stützfläche (41) für den Fangkörper (64), die in der Betätigungshülse (6) vorgesehen ist und dazu dient, den Fangköper (64) in einer in den Kanal (16) vorspringenden Stellung zu halten,
mit wenigstens einer der ersten Stützfläche (41) in Umfangsrichtung benachbarten zweiten Stützfläche (66,72) für den Fangkörper (64), die einen größeren radialen Abstand aufweist als die erste Stützfläche (41) und die in der Betätigungshülse vorgesehen ist, und
mit einer Verriegelungseinrichtung (39,64,69), die dazu eingerichtet, ist ein Drehen der Betätigungshülse (6) aus der ersten in die dritte Stellung zu verhindern, wenn sich der Stecker (77) in einer Stellung befindet, in der er durch den Verriegelungsstift (62) gehalten ist.

26. Buchsenteil nach Anspruch 25, **dadurch gekennzeichnet, dass** die Verriegelungseinrichtung (39,64,69) ein Verriegelungsglied (64) aufweist, das dazu eingerichtet ist, die Steckerposition abzufühlen.

27. Buchsenteil nach Anspruch 25, **dadurch gekennzeichnet, dass** die Verriegelungseinrichtung (39,64,69) eine radiale Bohrung (39) in dem Grundkörper (2) umfasst, die auf einer Höhe liegt, auf der eine Haltenut (82) des Stecker (77) liegt, der sich in der Entlüftungsstellung befindet.

28. Buchsenteil nach Anspruch 26, **dadurch gekennzeichnet, dass** das Verriegelungsglied (64) von einer Kugel gebildet ist und dass sich die Bohrung (39) zu dem Kanal (16) hin verjüngt.

29. Buchsenteil nach Anspruch 25, **dadurch gekennzeichnet, dass** eine Rückdreheinrichtung (8,51) vorhanden ist, die dazu eingerichtet ist, die Betätigungshülse (6) aus der zweiten oder der dritten Stellung in die erste Stellung zurück zu drehen.

30. Buchsenteil nach Anspruch 25, **dadurch gekennzeichnet, dass** die Rückdreheinrichtung (8) und die Mitnahmeeinrichtung (8) gemeinsame Bauteile umfassen.

31. Buchsenteil nach Anspruch 25, **dadurch gekennzeichnet, dass** zu der Druckringanordnung (8) ein Betätigungsring (48), der an dem Verriegelungsstift (62) anliegt und durch diesen drehgesichert ist, und ein Kuppelring (49) gehören, der sich zwischen der Feder (53) und dem Betätigungsring (48) befindet und der gegenüber der Betätigungshülse (6) drehgesichert ist.

32. Buchsenteil nach Anspruch 25, **dadurch gekennzeichnet, dass** entweder der Betätigungsring (48) oder der Kuppelring (49) wenigstens eine in axialer Richtung zeigende sägezahnförmige Nase (57) und der andere Ring eine korrespondierende sägezahnförmige Nut (55,56) enthält, die gemeinsam unter der Wirkung der Feder (53) ein Rückdrehmoment für die Betätigungshülse (6) erzeugen.

33. Buchsenteil nach Anspruch 25, **dadurch gekennzeichnet, dass** der Kuppelring (49) eine formschlüssige Kupplungseinrichtung (51) aufweist, über die die Betätigungshülse (6) in Umfangsrichtung formschlüssig mit dem Kuppelring (49) gekuppelt ist, die gegenüber dem Kuppelring (49) in axialer Richtung frei verschieblich ist.

34. Buchsenteil nach Anspruch 25, **dadurch gekennzeichnet, dass** der Kuppelring (49) eine formschlüssige Kupplungseinrichtung (51) aufweist, über die die Betätigungshülse (6) lediglich in der einen Umfangsrichtung formschlüssig mit dem Kuppelring (49) gekuppelt ist, die gegenüber dem Kuppelring (49) in axialer Richtung frei verschieblich ist.

35. Buchsenteil nach Anspruch 25, **dadurch gekennzeichnet, dass** die Mitnahmeeinrichtung (8) wenigstens einen Fortsatz (59 umfasst, der derart gestaltet ist, dass mit dem über den Buchsenkörper (2) überstehenden Ende wenigstens eines der Verriegelungsstifte (62) zusammenwirkt.

36. Buchsenteil nach Anspruch 25, **dadurch gekennzeichnet, dass** der Fortsatz (59) eine Breite in Umfangsrichtung aufweist, der bei Verwendung von zwei Verriegelungsstiften (62) mit geringem Spiel zwischen die über die Außenumfangsfläche (32) des Buchsenteils (2) überstehenden Enden der beiden Verriegelungsstifte (62) passt.

37. Buchsenteil nach Anspruch 25, **dadurch gekennzeichnet, dass** die Außenumfangsfläche (32) des Grundkörpers (2) zumindest in einem an dem vorderen Ende beginnenden Abschnitt im wesentlichen rotationssymmetrisch ist.

38. Buchsenteil nach Anspruch 25, **dadurch gekennzeichnet, dass** der Grundkörper (2) aus einem vorderen und einem hinteren Abschnitt (3,4) besteht, die miteinander formschlüssig verbunden sind.

39. Buchsenteil nach Anspruch 25, **dadurch gekennzeichnet, dass** der Kanal (16) ausgehend von seinem vorderen Ende bis hinter den Schlitz (36) zylindrisch mit durchgehend konstantem Querschnitt ist.

40. Buchsenteil nach Anspruch 25, **dadurch gekennzeichnet, dass** zwei Schlitze (36) enthalten sind, die sich bezüglich der Längsachse des Kanals (16) diametral gegenüber liegen und deren Seitenwände (37) Ebenen definieren, die in Richtung auf das vordere Ende konvergieren.

41. Buchsenteil nach Anspruch 25, **dadurch gekennzeichnet, dass** zwei Langlöcher (38) enthalten sind, die sich bezüglich der Längsachse des Kanals (16) diametral gegenüberliegen.

42. Buchsenteil nach Anspruch 41, **dadurch gekennzeichnet, dass** die Weite des Langlochs (38) gemessen rechtwinklig zu dessen Längsachse an der Außenumfangsfläche (32) des Grundkörpers (2) größer ist als auf der Seite des Kanals (16), derart, dass ein in dem Langloch (38) befindlicher Fangköper (63) daran gehindert ist, das Langloch (38) in Richtung auf den Kanal (16) zu passieren, wobei die Abmessungen derart gewählt sind, dass der Fangköper (63) in einer Lage, in der er der Längsachse des Kanals (16) am nächsten benachbart ist, in den Kanal (16) hineinragt.

43. Buchsenteil nach Anspruch 25, **dadurch gekennzeichnet, dass** der Fangköper (63) von einer Kugel gebildet ist.

44. Buchsenteil nach Anspruch 25, **dadurch gekennzeichnet, dass** die Betätigungshülse (6) ein Kunststoffspritzteil ist.

45. Buchsenteil nach Anspruch 25, **dadurch gekennzeichnet, dass** ein erster Abschnitt (41) der Betätigungshülse (6) einen geringeren Durchmesser aufweist als ein zweiter Abschnitt.

46. Buchsenteil nach Anspruch 25, **dadurch gekennzeichnet, dass** der Betätigungshülse (6) ein Verschlussring (7) zugeordnet ist.

47. Buchsenteil nach Anspruch 46, **dadurch gekennzeichnet, dass** der Verschlussring (7) mit der Betätigungshülse (6) formschlüssig verbunden ist.

48. Buchsenteil nach Anspruch 47, **dadurch gekennzeichnet, dass** die formschlüssige Verbindung von einer Rastverbindung gebildet ist.

49. Buchsenteil nach Anspruch 46, **dadurch gekennzeichnet, dass** der Verschlussring (7) sich auf jener Seite des Wiederlagers (33) befindet, die von dem vorderen Ende des Grundkörpers (2) abliegt.

50. Buchsenteil nach Anspruch 25, **dadurch gekennzeichnet, dass** die erste und/oder zweite Stützfläche (41) jeweils von einer Nut gebildet ist, die Richtung parallel zu der Längsachse der Bohrung verläuft.

51. Buchsenteil nach Anspruch 25, dadurch gekernzeichnet, dass die Druckringanordnung (8) an ihrer Außenseite zum Durchtritt einer Rippe (46) der Betätigungshülse (6) wenigstens einer Ausnehmung (51) aufweist.

## Claims

1. Bushing part (1) of a ventilation coupling for fluid connections,
with a base body (2), which contains a continuous, straight and rotationally symmetric duct (16) and which is defined by an outer peripheral face (32) and forms a front and a rear end, wherein a connector (77) may be inserted into the duct (16) from the front end,
with a valve (5, 25) contained in the duct (16), said valve being held in the opened position by the connector (77) when this is inserted,
with at least one slot (36) in the base body (2), the clearance profile of which tangentially intersects the duct (16) and the walls (37) of which are parallel to a plane, which is oriented on an incline to the longitudinal axis of the duct (16),
with at least one locking pin (62), which is located in the slot (36) and projects over the outer peripheral face (32) of the base body (2)with its two end sections,
with at least one elongated hole (38), which extends as far as the duct (16) from the outer peripheral face (32) and the longitudinal axis of which is oriented parallel to the longitudinal axis of the duct (16),
with at least one catch body (63), which is contained in the elongated hole (38) and the dimensions of which are greater in the radial direction in relation to the base body (2) than the wall thickness of the base body (2) in the region of the elongated hole (38)
with a pressure ring arrangement (8), which displaceably sits on the base body (2) and cooperates with the ends of the at least one locking pin (62),
with at least one pressure spring means (53), which is active between the pressure ring arrangement (8) and an abutment (33) fixed to the bushing in order to prestress the pressure ring arrangement (8) in the direction, in which the locking pin (62) is prestressed against the base of the slot (36),
with an operating sleeve (6), which is arranged on the base body (2) to be longitudinally displaceable on the base body (2) and the interior (40) of which contains a shoulder (42), which is fitted to cooperate with the ends of the at least one locking pin (62), wherein the operating sleeve (6) is displaceable from a first position into a second position to move the at least one locking pin (62) against the force of the spring (53), and is also rotatable from the first position into a third position to release the catch body (63),
with at least a first support face (41) for the catch body (63), which is provided in the operating sleeve (6) and serves to hold the catch body (63) in a position projecting into the duct (16),
with at least a second support face (65 .. 72) for the catch body (63), which second support face is adjacent to the first support face (41) in the peripheral direction, is at a larger radial distance than the first support face (41) and is provided in the operating sleeve (6),
with a stop (33) fixed to the bushing, which serves to prevent displacement of the operating sleeve (6) from the first position in a direction contrary to that of the second position, and
with a locking means (39, 64), which is fitted to prevent a rotation of the operating sleeve (6) out of the first position into the third position, when the connector (77) is located in a position, in which it is held by the locking pin (62).

2. Bushing part according to Claim 1, **characterised in that** the locking means (39, 64) has a locking member (64), which is fitted to sense the connector position.

3. Bushing part according to Claim 1, **characterised in that** the locking means (39, 64) comprises a radial hole (39) in the base body (2), which lies on a level at which a holding groove (83) of the connector (77) lies, said connector being located in the ventilation position.

4. Bushing part according to Claim 3, **characterised in that** the locking member (64) is formed by a sphere, and that the hole (39) tapers towards the duct (16).

5. Bushing part according to Claim 1, **characterised in that** a reverse rotation means (8, 53) is provided, which is fitted to rotate the operating sleeve (6) back out of the third position into the first position.

6. Bushing part according to Claim 1, **characterised in that** the reverse rotation means (8, 53) comprises the pressure ring arrangement (8).

7. Bushing part according to Claim 1, **characterised in that** an operating ring (48), which abuts against the locking pin (62) and is secured against rotation by this, and a coupling ring (49) belong to the pressure ring arrangement (8), said coupling ring being located between the spring (53) and the operating ring (48) and being secured against rotation relative to the operating sleeve (6).

8. Bushing part according to Claim 7, **characterised in that** either the operating ring (48) or the coupling ring (49) contains at least one lug (57) pointing in axial direction, and the other ring contains a corresponding V-shaped groove (55, 56), these jointly generating a reverse rotational moment for the operating sleeve (6) against the action of the spring (53).

9. Bushing part according to Claim 7, **characterised in that** the coupling ring (49) has a positive-locking coupling means (51), via which the operating sleeve (6) is positively coupled to the coupling ring (49) in the peripheral direction and which is freely displaceable in axial direction relative to the coupling ring (49).

10. Bushing part according to Claim 1, **characterised in that** the outer peripheral face (32) of the base body (2) is essentially rotationally symmetric at least in a section beginning at the front end.

11. Bushing part according to Claim 1, **characterised in that** the base body (2) comprises a front and a rear section (3, 4), which are positively connected to one another.

12. Bushing part according to Claim 1, **characterised in that** extending from its front end to behind the slot (36), the duct (16) is cylindrical with a continuously constant cross-section.

13. Bushing part according to Claim 1, **characterised in that** two slots (36) are contained, which lie diametrically opposite one another relative to the longitudinal axis of the duct (16), and the side walls (37) of which define planes, which converge towards the front end.

14. Bushing part according to Claim 1, **characterised in that** two elongated holes (38) are contained, which lie diametrically opposite one another relative to the longitudinal axis of the duct (16).

15. Bushing part according to Claim 1, **characterised in that** measured at right angles to its longitudinal axis, the width of the elongated hole (38) is greater on the outer peripheral face (32) of the base body (2) than on the side of the duct (16), such that a catch body (64) located in the elongated hole (38) is prevented from passing through the elongated hole (38) towards the duct (16), wherein the dimensions are such that when in a position, in which it is closest adjacent to the longitudinal axis of the duct (16), the catch body (64) projects into the duct (16).

16. Bushing part according to Claim 1, **characterised in that** the catch body (64) is formed by a sphere.

17. Bushing part according to Claim 1, **characterised in that** the operating sleeve (6) is an injection moulded plastic part.

18. Bushing part according to Claim 1, **characterised in that** a front section (41) of the operating sleeve (6) has a smaller diameter than a rear section.

19. Bushing part according to Claim 1, **characterised in that** the operating sleeve (6) has an associated locking ring (7).

20. Bushing part according to Claim 19, **characterised in that** the locking ring (7) is positively connected to the operating sleeve (6).

21. Bushing part according to Claim 20, **characterised in that** the positive connection is formed by a catch connection (44).

22. Bushing part according to Claim 21, **characterised in that** the locking ring (7) is located on the side of the abutment (33) remote from the front end of the base body (2).

23. Bushing part according to Claim 1, **characterised in that** the first and/or the second support face is respectively formed by a groove (65 .. 72), which runs in a parallel direction to the longitudinal axis of the elongated hole (38).

24. Bushing part according to Claim 1, **characterised in that** the pressure ring arrangement (8) has at least one recess (51) on its outside for passage of a rib (46) of the operating sleeve (6).

25. Bushing part (1) of a ventilation coupling for fluid connections,
with a base body (2), which contains a continuous, straight and rotationally symmetric duct (16) and which is defined by an outer peripheral face (32) and forms a front and a rear end, wherein a connector (77) may be inserted into the duct (16) from the front end,
with a valve (5, 25) contained in the duct (16), said valve being held in the opened position by the connector (77) when this is inserted,
with at least a first slot (36) in the base body (2), the clearance profile of which tangentially intersects the duct (16) and the walls (37) of which are parallel to a plane, which is oriented on an incline to the longitudinal axis of the duct (16),
with at least one locking pin (62), which is located in the slot (36) and projects over the outer peripheral face (32) of the base body (2) with its two end sections,
with at least one elongated hole (38), which extends as far as the duct (16) from the outer peripheral face (32) and the longitudinal axis of which is oriented parallel to the longitudinal axis of the duct (16),
with at least one catch body (63), which is contained in the elongated hole (38) and the dimensions of which are greater in the radial direction in relation to the base body (2) than the wall thickness of the base body (2) in the region of the elongated hole (38)
with a pressure ring arrangement (8), which displaceably sits on the base body (2) and cooperates with the ends of the at least one locking pin (62),
with at least one pressure spring (53), which is active between the pressure ring arrangement (8) and an abutment (33) fixed to the bushing in order to prestress the pressure ring arrangement (8) in the direction, in which the locking pin (62) is prestressed against the base of the slot (36),
with an operating sleeve (6), which is arranged on the base body (2) and is non-displaceable and rotatable on the base body (2), which is rotatable from a first position into a second position and also from the first position into a third position, wherein the first position lies between the second and the third position,
with an entrainment means (8), which is coupled onto the operating sleeve (6) and is fitted to cooperate with the ends of the at least one locking pin (62),
with at least a first support face (41) for the catch body (64), which is provided in the operating sleeve (6) and serves to hold the catch body (64) in a position projecting into the duct (16),
with at least a second support face (66, 72) for the catch body (64), which second support face is adjacent to the first support face (41) in the peripheral direction, is at a larger radial distance than the first support face (41) and is provided in the operating sleeve, and
with a locking means (39, 64, 69), which is fitted to prevent a rotation of the operating sleeve (6) out of the first position into the third position, when the connector (77) is located in a position, in which it is held by the locking pin (62).

26. Bushing part according to Claim 25, **characterised in that** the locking means (39, 64, 69) has a locking member (64), which is fitted to sense the connector position.

27. Bushing part according to Claim 25, **characterised in that** the locking means (39, 64, 69) comprises a radial hole (39) in the base body (2), which lies on a level at which a holding groove (82) of the connector (77) lies, said connector being located in the ventilation position.

28. Bushing part according to Claim 26, **characterised in that** the locking member (64) is formed by a sphere, and that the hole (39) tapers towards the duct (16).

29. Bushing part according to Claim 25, **characterised in that** a reverse rotation means (8, 51) is provided, which is fitted to rotate the operating sleeve (6) back out of the second or third position into the first position.

30. Bushing part according to Claim 25, **characterised in that** the reverse rotation means (8) and the entrainment means (8) comprise common structural parts.

31. Bushing part according to Claim 25, **characterised in that** an operating ring (48), which abuts against the locking pin (62) and is secured against rotation by this, and a coupling ring (49) belong to the pressure ring arrangement (8), said coupling ring being located between the spring (53) and the operating ring (48) and being secured against rotation relative to the operating sleeve (6).

32. Bushing part according to Claim 25, **characterised in that** either the operating ring (48) or the coupling ring (49) contains at least one sawtooth-shaped lug (57) pointing in axial direction, and the other ring contains a corresponding sawtooth-shaped groove (55, 56), these jointly generating a reverse rotational moment for the operating sleeve (6) against the action of the spring (53).

33. Bushing part according to Claim 25, **characterised in that** the coupling ring (49) has a positive-locking coupling means (51), via which the operating sleeve (6) is positively coupled to the coupling ring (49) in the peripheral direction and which is freely displaceable in axial direction relative to the coupling ring (49).

34. Bushing part according to Claim 25, **characterised in that** the coupling ring (49) has a positive-locking coupling means (51), via which the operating sleeve (6) is coupled positively to the coupling ring (49) only in one peripheral direction and which is freely displaceable in axial direction relative to the coupling ring (49).

35. Bushing part according to Claim 25, **characterised in that** entrainment means (8) comprises at least one extension (59), which is formed such that at least one of the locking pins (62) cooperates with the end projecting over the bushing body (2).

36. Bushing part according to Claim 25, **characterised in that** the extension (59) has a width in the peripheral direction, which when using two locking pins (62) fits with slight play between the ends of the two locking pins (62) projecting over the outer peripheral face (32) of the bushing part (2).

37. Bushing part according to Claim 25, **characterised in that** the outer peripheral face (32) of the base body (2) is essentially rotationally symmetric at least in a section beginning at the front end.

38. Bushing part according to Claim 25, **characterised in that** the base body (2) comprises a front and a rear section (3, 4), which are positively connected to one another.

39. Bushing part according to Claim 25, **characterised in that** extending from its front end to behind the slot (36), the duct (16) is cylindrical with a continuously constant cross-section.

40. Bushing part according to Claim 25, **characterised in that** two slots (36) are contained, which lie diametrically opposite one another relative to the longitudinal axis of the duct (16) and the side walls (37) of which define planes, which converge towards the front end.

41. Bushing part according to Claim 25, **characterised in that** two elongated holes (38) are contained, which lie diametrically opposite one another relative to the longitudinal axis of the duct (16).

42. Bushing part according to Claim 41, **characterised in that** measured at right angles to its longitudinal axis, the width of the elongated hole (38) is greater on the outer peripheral face (32) of the base body (2) than on the side of the duct (16), such that a catch body (63) located in the elongated hole (38) is prevented from passing through the elongated hole (38) towards the duct (16), wherein the dimensions are such that when in a position, in which it is closest adjacent to the longitudinal axis of the duct (16), the catch body (63) projects into the duct (16).

43. Bushing part according to Claim 25, **characterised in that** the catch body (63) is formed by a sphere.

44. Bushing part according to Claim 25, **characterised in that** the operating sleeve (6) is an injection moulded plastic part.

45. Bushing part according to Claim 25, **characterised in that** a first section (41) of the operating sleeve (6) has a smaller diameter than a second section.

46. Bushing part according to Claim 25, **characterised in that** the operating sleeve (6) has an associated locking ring (7).

47. Bushing part according to Claim 46, **characterised in that** the locking ring (7) is positively connected to the operating sleeve (6).

48. Bushing part according to Claim 47, **characterised in that** the positive connection is formed by a catch connection.

49. Bushing part according to Claim 46, **characterised in that** the locking ring (7) is located on the side of the abutment (33) remote from the front end of the base body (2).

50. Bushing part according to Claim 25, **characterised in that** the first and/or the second support face (41) is respectively formed by a groove, which runs in a parallel direction to the longitudinal axis of the hole.

51. Bushing part according to Claim 25, **characterised in that** the pressure ring arrangement (8) has at least one recess (51) on its outside for passage of a rib (46) of the operating sleeve (6).

## Revendications

1. Elément de raccord (1) d'un coupleur à purge d'air pour liaisons de fluides,
avec un corps de base (2) qui contient un canal (16) traversant, rectiligne et symétrique de révolution, est délimité par une surface périphérique extérieure (32) et forme une extrémité antérieure et une extrémité postérieure, un embout (77) pouvant être introduit dans le canal (16) à partir de l'extrémité antérieure,
avec une soupape (5, 25) montée dans le canal (16), qui est maintenue dans la position ouverte, lorsque l'embout (77) est inséré,
avec au moins une fente (36) aménagée dans le corps de base (2), dont le profil ouvert coupe tangentiellement le canal (16) et dont les parois (37) sont parallèles à un plan incliné par rapport à l'axe longitudinal du canal (16),
avec au moins une tige de verrouillage (62) qui est disposée dans la fente (36) et dépasse par ses deux extrémités par rapport à la surface périphérique extérieure (32) du corps de base (2),
avec au moins un trou oblong (38) qui s'étend depuis la surface périphérique extérieure (32) jusqu'au canal (16) et dont l'axe longitudinal est orienté parallèlement à l'axe longitudinal du canal (16),
avec un corps de retenue (63) qui est logé dans le trou oblong (38) et dont les dimensions dans la direction radiale rapporté au corps de base (2) sont supérieures à l'épaisseur de paroi du corps de base (2) dans la région du trou oblong (38),
avec un agencement de bagues de poussée (8) qui est monté à coulissement sur le corps de base (2) et coopère avec les extrémités de la tige de verrouillage (62), au nombre d'au moins une,
avec au moins un ressort de compression (53) qui agit entre l'agencement de bagues de poussée (8) et une butée de contre-appui (33) solidaire du raccord, aux fins de précontraindre l'agencement de bagues de poussée (8) dans la direction dans laquelle la tige de verrouillage (63) est appliquée avec précontrainte contre le fond de la fente (36),
avec un manchon d'actionnement (6) monté sur le corps de base (2) et coulissant longitudinalement sur celui-ci, dont la chambre intérieure (40) comporte un épaulement (42) aménagé pour coopérer avec les extrémités de la tige de verrouillage (62), au nombre d'au moins une, le manchon d'actionnement (6), pour déplacer la tige de verrouillage (62), au nombre d'au moins une, pouvant coulisser à l'encontre de la force du ressort (53) d'une première position jusque dans une deuxième position, et pour libérer le corps de retenue (63) pouvant tourner de la première position dans une troisième position,
avec au moins une première surface d'appui (41) pour le corps de retenue (63), qui est prévue sur le manchon d'actionnement (6) et sert à maintenir le corps de retenue (63) dans une première position dans laquelle il fait saillie dans le canal (16),
avec au moins une deuxième surface d'appui (65..72) pour le corps de retenue (63), qui est voisine de la première surface d'appui (41) dans la direction périphérique, présente une distance radiale plus grande que la première surface d'appui (41) et est prévue dans le manchon d'actionnement (6),
avec une butée (33) solidaire du raccord qui sert à empêcher le coulissement du manchon d'actionnement (6) de la première position dans une direction opposée à la deuxième position et
avec un dispositif de verrouillage (39, 64) qui est agencé en vue d'empêcher une rotation du manchon d'actionnement (6) de la première position dans la troisième position, lorsque l'embout (77) se trouve dans une position, dans laquelle il est retenu par la tige de verrouillage (62).

2. Elément de raccord selon la revendication 1, **caractérisé par le fait que** le dispositif de verrouillage (39, 64) comporte un organe de verrouillage (64), qui est agencé pour palper la position de l'embout.

3. Elément de raccord selon la revendication 1, **caractérisé par le fait que** le dispositif de verrouillage (39, 64) comprend un trou radial (39) dans le corps de base (2) qui est situé à une hauteur où se trouve une gorge de retenue (83) de l'embout (77) dans la position de purge d'air.

4. Elément de raccord selon la revendication 3, **caractérisé par le fait que** l'organe de verrouillage (64) est formé d'une bille et que le trou (39) se rétrécit en direction du canal (16).

5. Elément de raccord selon la revendication 1, **caractérisé par le fait qu'**il est prévu un dispositif de rappel (8, 53), qui est agencé pour ramener par rotation le manchon d'actionnement (6) de la troisième position dans la première position.

6. Elément de raccord selon la revendication 1, **caractérisé par le fait que** le dispositif de rappel (8, 53) comprend l'agencement de bagues de poussée (8).

7. Elément de raccord selon la revendication 1, **caractérisé par le fait que** l'agencement de bagues de poussée (8) comprend une bague d'actionnement (48) qui est en contact avec la tige de verrouillage (62) et est bloquée en rotation par celle-ci et une bague de couplage (49) qui est disposée entre le ressort (53) et la bague d'actionnement (48) et est fixe en rotation vis-à-vis du manchon d'actionnement (6).

8. Elément de raccord selon la revendication 7, **caractérisé par le fait que** soit la bague d'actionnement (48), soit la bague de couplage (49), comporte au moins un bec (57) orienté dans la direction axiale et que l'autre bague comporte une rainure en V (55, 56) correspondante, qui ensemble, sous l'action du ressort (53) génèrent un couple de rappel pour le manchon d'actionnement (6).

9. Elément de raccord selon la revendication 7, **caractérisé par le fait que** la bague de couplage (49) comporte un dispositif de couplage (51) à complémentarité de formes, par lequel le manchon d'actionnement (6) est couplé par obstacle dans la direction périphérique à la bague de couplage (49) mais peut coulisser librement dans la direction axiale par rapport à la bague de couplage (49).

10. Elément de raccord selon la revendication 1, **caractérisé par le fait que** la surface périphérique extérieure (32) du corps de base (2), au moins dans une portion commençant à l'extrémité antérieure, est essentiellement symétrique de révolution.

11. Elément de raccord selon la revendication 1, **caractérisé par le fait que** le corps de base (2) est formé d'une portion antérieure et d'une portion postérieure (3, 4) qui sont liées entre elles par complémentarité de formes.

12. Elément de raccord selon la revendication 1, **caractérisé par le fait que** le canal (16) depuis son extrémité antérieure jusque derrière la fente (36) est cylindrique avec une section constante.

13. Elément de raccord selon la revendication 1, **caractérisé par le fait qu'**il comporte deux fentes (36) qui sont diamétralement opposées par rapport à l'axe longitudinal du canal (16), et dont les parois latérales (37) définissent des plans qui convergent en direction de l'extrémité antérieure.

14. Elément de raccord selon la revendication 1, **caractérisé par le fait qu'**il comporte deux trous oblongs (38) qui sont diamétralement opposées par rapport à l'axe longitudinal du canal (16).

15. Elément de raccord selon la revendication 1, **caractérisé par le fait que** la largeur du trou oblong (38) mesurée perpendiculairement à son axe longitudinal au niveau de la surface périphérique extérieure (32) du corps de base (2) est plus grande que du côté du canal (16), de telle sorte qu'un corps de retenue (64) placé dans le trou oblong (38) ne peut pas passer à travers le trou oblong (38) en direction du canal (16), les dimensions étant choisies telles que le corps de retenue (64) dans une position dans laquelle il est le plus proche de l'axe longitudinal du canal (16), fasse saillie dans ledit canal (16).

16. Elément de raccord selon la revendication 1, **caractérisé par le fait que** le corps de retenue (64) est formé d'une bille.

17. Elément de raccord selon la revendication 1, **caractérisé par le fait que** le manchon d'actionnement (6) est une pièce en matière plastique moulée par injection.

18. Elément de raccord selon la revendication 1, **caractérisé par le fait qu'**une portion antérieure (41) du manchon d'actionnement (6) présente un diamètre plus petit qu'une portion postérieure.

19. Elément de raccord selon la revendication 1, **caractérisé par le fait qu'**une bague de fermeture (7) est associée au manchon d'actionnement (6).

20. Elément de raccord selon la revendication 19, **caractérisé par le fait que** la bague de fermeture (7) est liée par complémentarité de formes au manchon d'actionnement (6).

21. Elément de raccord selon la revendication 20, **caractérisé par le fait que** la liaison par complémentarité de formes est formée d'une liaison à encliquetage (44).

22. Elément de raccord selon la revendication 21, **caractérisé par le fait que** la bague de fermeture (7) est disposée du côté de la butée de contre appui (33) qui est éloigné de l'extrémité antérieure du corps de base (2).

23. Elément de raccord selon la revendication 1, **caractérisé par le fait que** la première et/ou la deuxième surface d'appui est formée chaque fois par une rainure (65..72) qui s'étend dans une direction parallèle à l'axe longitudinal du trou oblong (38).

24. Elément de raccord selon la revendication 1, **caractérisé par le fait que** l'agencement de bagues de poussée (8), sur sa face extérieure, présente au moins un évidement (51) pour le passage d'une nervure (46) du manchon d'actionnement (6).

25. Elément de raccord (1) d'un coupleur rapide à purge d'air pour liaisons de fluides,
avec un corps de base (2) qui contient un canal (16) traversant, rectiligne et symétrique de révolution, est délimité par une surface périphérique extérieure (32) et forme une extrémité antérieure et une extrémité postérieure, un embout (77) pouvant être introduit dans le canal (16) à partir de l'extrémité antérieure,
avec une soupape (5, 25) montée dans le canal (16) qui est maintenue dans la position ouverte, lorsque l'embout (77) est inséré,
avec au moins une première fente (36) aménagée dans le corps de base (2), dont le profil ouvert coupe tangentiellement le canal (16) et dont les parois (37) sont parallèles à un plan incliné par rapport à l'axe longitudinal du canal (16),
avec au moins une tige de verrouillage (62) qui est disposée dans la fente (36) et dépasse par ses deux extrémités par rapport à la surface périphérique extérieure (32) du corps de base (2),
avec au moins un trou oblong (38) qui s'étend depuis la surface périphérique extérieure (32) jusqu'au canal (16) et dont l'axe longitudinal est orienté parallèlement à l'axe longitudinal du canal (16),
avec un corps de retenue (63) qui est logé dans le trou oblong (38) et dont les dimensions dans la direction radiale, rapporté au corps de base (2), sont supérieures à l'épaisseur de paroi du corps de base (2) dans la région du trou oblong (38),
avec un agencement de bagues de poussée (8) qui est monté à coulissement sur le corps de base (2) et coopère avec les extrémités de la tige de verrouillage (62), au nombre d'au moins une,
avec au moins un ressort de compression (53) qui agit entre l'agencement de bagues de poussée (8) et une butée de contre-appui (33), aux fins de précontraindre l'agencement de bagues de poussée (8) dans la direction dans laquelle la tige de verrouillage (63) est appliquée avec précontrainte contre le fond de la fente (36),
avec un manchon d'actionnement (6) monté tournant et fixe en translation sur le corps de base (2), qui peut être amené par rotation d'une première position dans une deuxième position et également de la première position dans une troisième position, la première position étant située entre la deuxième position et la troisième position,
avec un dispositif d'entraînement (8) qui est couplé au manchon d'actionnement (6) et est agencé pour coopérer avec les extrémités de la tige de verrouillage (62), au nombre d'au moins une,
avec au moins une première surface d'appui (41) pour le corps de retenue (64), qui est prévue sur le manchon d'actionnement (6) et sert à maintenir le corps de retenue (64) dans une première position dans laquelle il fait saillie dans le canal (16),
avec au moins une deuxième surface d'appui (66,72) pour le corps de retenue (64), qui est voisine de la première surface d'appui (41) dans la direction périphérique, présente une distance radiale plus grande que la première surface d'appui (41) et est prévue dans le manchon d'actionnement (6), et
avec un dispositif de verrouillage (39, 64, 69) qui est agencé en vue d'empêcher une rotation du manchon d'actionnement (6) de la première position dans la troisième position, lorsque l'embout (77) se trouve dans une position dans laquelle il est retenu par la tige de verrouillage (62).

26. Elément de raccord selon la revendication 25, **caractérisé par le fait que** le dispositif de verrouillage (39, 64, 69) comporte un organe de verrouillage (64), qui est agencé pour palper la position de l'embout.

27. Elément de raccord selon la revendication 25, **caractérisé par le fait que** le dispositif de verrouillage (39, 64, 69) comprend un trou radial (39) dans le corps de base (2), qui est situé à une hauteur où se trouve une gorge de retenue (82) de l'embout (77) dans la position de purge d'air.

28. Elément de raccord selon la revendication 26, **caractérisé par le fait que** l'organe de verrouillage (64) est formé d'une bille et que le trou (39) se rétrécit en direction du canal (16).

29. Elément de raccord selon la revendication 25, **caractérisé par le fait qu'**il est prévu un dispositif de rappel (8, 513), qui est agencé pour ramener par rotation le manchon d'actionnement (6) de la deuxième ou la troisième position dans la première position.

30. Elément de raccord selon la revendication 25, **caractérisé par le fait que** le dispositif de rappel (8) et le dispositif d'entraînement (8) comprennent des éléments communs.

31. Elément de raccord selon la revendication 25, **caractérisé par le fait que** l'agencement de bagues de poussée (8) comprend une bague d'actionnement (48), qui est en contact avec la tige de verrouillage (62) et est bloquée en rotation par celle-ci, et une bague de couplage (49), qui est disposée entre le ressort (53) et la bague d'actionnement (48) et est fixe en rotation vis-à-vis du manchon d'actionnement (6).

32. Elément de raccord selon la revendication 25, **caractérisé par le fait que** soit la bague d'actionnement (48), soit la bague de couplage (49) comporte au moins un bec (57) en forme de dent de scie orienté dans la direction axiale et que l'autre bague comporte une rainure en forme de dent de scie (55, 56) correspondante qui ensemble, sous l'action du ressort (53) génèrent un couple de rappel pour le manchon d'actionnement (6).

33. Elément de raccord selon la revendication 25, **caractérisé par le fait que** la bague de couplage (49) comporte un dispositif de couplage (51) à complémentarité de formes, par lequel le manchon d'actionnement (6) est couplé par obstacle dans la direction périphérique à la bague de couplage (49) et peut coulisser librement dans la direction axiale par rapport à la bague de couplage (49).

34. Elément de raccord selon la revendication 25, **caractérisé par le fait que** la bague de couplage (49) comporte un dispositif de couplage (51) à complémentarité de formes, par l'intermédiaire duquel le manchon d'actionnement (6) est couplé par obstacle seulement dans une direction périphérique à la bague de couplage (49) et peut coulisser librement dans la direction axiale par rapport à la bague de couplage (49).

35. Elément de raccord selon la revendication 25, **caractérisé par le fait que** le dispositif d'entraînement (8) comporte au moins un prolongement (59), qui est agencé de telle sorte qu'il coopère avec l'extrémité dépassant par rapport au corps de base (2) d'au moins une des tiges de verrouillage (62).

36. Elément de raccord selon la revendication 25, **caractérisé par le fait que** le prolongement (59) a une largeur dans la direction périphérique qui, dans le cas de deux tiges de verrouillage (62, s'adapte avec un faible jeu entre les extrémités des deux tiges de verrouillage (62) dépassant au-delà surface périphérique extérieure (32) du corps de base (2).

37. Elément de raccord selon la revendication 25, **caractérisé par le fait que** la surface périphérique extérieure (32) du corps de base (2), au moins dans une portion commençant à l'extrémité antérieure, est essentiellement symétrique de révolution.

38. Elément de raccord selon la revendication 25, **caractérisé par le fait que** le corps de base (2) est formé d'une portion antérieure et d'une portion postérieure (3, 4) qui sont liées entre elles par complémentarité de formes.

39. Elément de raccord selon la revendication 25, **caractérisé par le fait que** le canal (16), depuis son extrémité antérieure jusque derrière la fente (36), est cylindrique avec une section constante.

40. Elément de raccord selon la revendication 25, **caractérisé par le fait qu'**il comporte deux fentes (36) qui sont diamétralement opposées par rapport à l'axe longitudinal du canal (16) et dont les parois latérales (37) définissent des plans qui convergent en direction de l'extrémité antérieure.

41. Elément de raccord selon la revendication 25, **caractérisé par le fait qu'**il comporte deux trous oblongs (38) qui sont diamétralement opposées par rapport à l'axe longitudinal du canal (16).

42. Elément de raccord selon la revendication 41, **caractérisé par le fait que** la largeur du trou oblong (38) mesurée perpendiculairement à son axe longitudinal au niveau de la surface périphérique extérieure (32) du corps de base (2) est plus grande que du côté du canal (16), de telle sorte qu'un corps de retenue (63) placé dans le trou oblong (38) ne peut pas passer à travers le trou oblong (38) en direction du canal (16), les dimensions étant choisies telles que le corps de retenue (63), dans une position dans laquelle il est le plus proche de l'axe longitudinal du canal (16), fasse saillie dans ledit canal (16).

43. Elément de raccord selon la revendication 25, **caractérisé par le fait que** le corps de retenue (63) est formé d'une bille .

44. Elément de raccord selon la revendication 25, **caractérisé par le fait que** le manchon d'actionnement (6) est une pièce en matière plastique moulée par injection.

45. Elément de raccord selon la revendication 25, **caractérisé par le fait qu'**une première portion (41) du manchon d'actionnement (6) présente un diamètre plus petit qu'une deuxième portion.

46. Elément de raccord selon la revendication 25, **caractérisé par le fait qu'**une bague de fermeture (7) est associée au manchon d'actionnement (6).

47. Elément de raccord selon la revendication 46, **caractérisé par le fait que** la bague de fermeture (7) est liée par complémentarité de formes au manchon d'actionnement (6).

48. Elément de raccord selon la revendication 47, **caractérisé par le fait que** la liaison par complémentarité de formes est formée d'une liaison à encliquetage (44).

49. Elément de raccord selon la revendication 46, **caractérisé par le fait que** la bague de fermeture (7) est disposée du côté de la butée de contre appui (33) qui est éloigné de l'extrémité antérieure du corps de base (2).

50. Elément de raccord selon la revendication 25, **caractérisé par le fait que** la première et/ou la deuxième surface d'appui (41) est formée chaque fois par une rainure qui s'étend parallèlement à l'axe longitudinal du trou.

51. Elément de raccord selon la revendication 251, **caractérisé par le fait que** l'agencement de bagues de poussée (8), sur sa face extérieure, présente au moins un évidement (51) pour le passage d'une nervure (46) du manchon d'actionnement (6).
